# EUROPÄISCHE PATENTANMELDUNG

(11) **EP 4 491 065 A1**
(43) Veröffentlichungstag der Anmeldung: **15.01.2025**
(21) Anmeldenummer: 23185192.4
(22) Anmeldetag: 13.07.2023
(51) Int. Cl.: A47J 29/02, A47J 36/32

(54) **NAHRUNGSMITTELZUBEREITUNGSSYSTEM, PROZESSLEITVORRICHTUNG, TRAGBARE INFORMATIONSEINHEIT UND VERWENDUNG EINES NAHRUNGSMITTELZUBEREITUNGSSYSTEMS**

(71) Anmelder: Sment - Sepp Müller Entwicklungen, 6221 Rickenbach LU (CH)
(72) Erfinder: MÜLLER, Josef Alois, 6221 Rickenbach (LU) (CH)
(74) Vertreter: Zander, Ellen Vilja

(57) **Zusammenfassung**

Nahrungsmittelzubereitungssystem (50), insbesondere Nahrungsmittelgarsystem, mit zumindest einem Zubereitungsgerät (10), insbesondere einem Gargerät, zur Zubereitung zumindest eines Nahrungsmittels (12) und mit einer Prozessleitvorrichtung (14), welche dazu vorgesehen ist, einen Parametersatz, welcher zumindest einen Parameter des Nahrungsmittels (12) und zumindest einen Parameter des Zubereitungsgeräts (10) umfasst, zu erfassen und diesen zur Berechnung zumindest einer Zubereitungskenngrösse heranzuziehen. Das Nahrungsmittelzubereitungssystem (50) weist zumindest eine tragbare Informationseinheit (16) auf, welche dazu vorgesehen ist, die Zubereitungskenngrösse von der Prozessleitvorrichtung (14) zu empfangen und während eines Zubereitungsprozesses des Nahrungsmittels (12) durch das Zubereitungsgerät (10) einen aktuellen Wert der Zubereitungskenngrösse auszugeben.

## Beschreibung

### Stand der Technik

Die Erfindung betrifft ein Nahrungsmittelzubereitungssystem nach dem Oberbegriff des Anspruchs 1, eine Prozessleitvorrichtung nach Anspruch 13, eine tragbare Informationseinheit nach Anspruch 14 und eine Verwendung eines Nahrungsmittelzubereitungssystems nach Anspruch 15.

Aus dem Stand der Technik sind bereits Zubereitungsgeräte, insbesondere Eierkocher, zur Zubereitung von Nahrungsmitteln sowie Prozessleitvorrichtungen zur Anleitung und Steuerung der Zubereitung von Nahrungsmitteln durchaus bekannt. Beispielsweise aus dem Dokument DE 10 2005 032 362 A1 ist ein Eierkocher bekannt, welcher vor Beginn einer Zubereitung, und zwar einer Garung des Eis, zumindest ein Ei spezifischen Parameter, beispielsweise eine Ei-Grösse, eine Ei-Temperatur oder ein Ei-Gewicht erfasst, um basierend darauf eine auf das Ei angepasste und abgestimmte Garzeit für unterschiedliche Härtegrade/Garstufen zu ermitteln. Im Gastrobereich oder in der Hotellerie kann es vorkommen, dass mehrere Benutzer gleichzeitig ein Zubereitungsgerät, beispielsweise einen Eierkocher, zur Zubereitung eines Nahrungsmittels, und zwar eines Eis nutzen wollen, wobei jeder Benutzer individuelle Bedürfnisse und Anforderungen an die Zubereitung seines Nahrungsmittels hat. Bislang muss jeder Benutzer selbstständig den Zubereitungsprozess des Nahrungsmittels überwachen. Im Falle des Eierkochers muss sich der Benutzer nach Einlegen und/oder Anordnen des Eies in dem Eierkocher selbständig beispielsweise mit seinem Handy oder seiner Uhr einen Timer oder Wecker stellen, um rechtzeitig sein Ei aus dem Eierkocher zu entfernen. Hierbei stellt jeder Benutzer eine individuelle Garzeit ein, da manche Benutzer ihr Ei hart, andere Benutzer das Ei weich bevorzugen. Dieser Prozess ist für den einzelnen Benutzer sehr umständlich und erfordert stets einen aktiven Schritt des Benutzers zur Garzeiteinstellung sowie -überwachung.

Die Aufgabe der Erfindung besteht insbesondere darin, ein gattungsgemässes System mit verbesserten Eigenschaften hinsichtlich eines Komforts bereitzustellen. Die Aufgabe wird erfindungsgemäss durch die Merkmale der Ansprüche 1, 13, 14 und 15 gelöst, während vorteilhafte Ausgestaltungen und Weiterbildungen der Erfindung den Unteransprüchen entnommen werden können.

### Beschreibung der Erfindung

Die Erfindung geht aus von einem Nahrungsmittelzubereitungssystem, insbesondere einem Nahrungsmittelgarsystem, mit zumindest einem Zubereitungsgerät, insbesondere einem Gargerät, zur Zubereitung zumindest eines Nahrungsmittels und mit einer Prozessleitvorrichtung, welche dazu vorgesehen ist, einen Parametersatz, welcher zumindest einen Parameter des Nahrungsmittels und zumindest einen Parameter des Zubereitungsgeräts umfasst, zu erfassen und diesen zur Berechnung zumindest einer Zubereitungskenngrösse heranzuziehen.

Es wird vorgeschlagen, dass das Nahrungsmittelzubereitungssystem zumindest eine tragbare Informationseinheit aufweist, welche dazu vorgesehen ist, die Zubereitungskenngrösse von der Prozessleitvorrichtung zu empfangen und während eines Zubereitungsprozesses des Nahrungsmittels, insbesondere eines Garprozesses des Nahrungsmittels, durch das Zubereitungsgerät einen aktuellen Wert der Zubereitungskenngrösse auszugeben.

Durch eine derartige Ausgestaltung kann ein Komfort, und zwar ein Benutzerkomfort gesteigert werden. Mittels einer tragbaren Informationseinheit kann ein Benutzer den Überblick und/oder die Kontrolle über einen Zubereitungsprozess zumindest eines Nahrungsmittels behalten. Damit kann der Zubereitungsprozess benutzerfreundlicher, leichter, intuitiver, unkomplizierter und effizienter gestaltet werden. Zudem kann die Informationseinheit von dem Benutzer frei im Raum oder in einer Umgebung herumgetragen und positioniert werden, sodass der Benutzer während des Zubereitungsprozesses selbst bei Entfernung von einem Zubereitungsgerät einen Überblick über einen aktuellen Wert einer Zubereitungskenngrösse behalten kann. Darüber hinaus kann auf ein manuelles Einstellen und/oder Eingeben einer Zubereitungskenngrösse, bevorzugt einer Zubereitungsdauer, verzichtet werden. Ausserdem kann aufgrund einer Berücksichtigung eines Parametersatzes bei Berechnung der Zubereitungskenngrösse das Nahrungsmittel individueller und effizienter zubereitet werden. Ferner kann ein Zubereitungsergebnis des Nahrungsmittels verbessert sowie auf die Bedürfnisse, Vorliegen und Wünsche des Benutzers abgestimmt werden. Zudem kann das Nahrungsmittelzubereitungssystem in zumindest der Gastronomie und/oder Hotellerie eingesetzt werden, und zwar bevorzugt genau dann, wenn mehrere Benutzer individuelle Zubereitungsprozesse an ein und demselben Zubereitungsgerät durchführen wollen.

Das Nahrungsmittelzubereitungssystem kann, und zwar ohne darauf beschränkt zu sein, zu einem Einsatz, einer Anordnung und/oder Verwendung in einem Haushalt, insbesondere einer Küche, vorgesehen sein. Besonders bevorzugt ist das Nahrungsmittelzubereitungssystem zu einem Einsatz, Anordnung und/oder Verwendung in der Gastronomie und/oder Hotellerie vorgesehen. Das Nahrungsmittelzubereitungssystem kann eine Vielzahl an Einheiten, Elementen und/oder Vorrichtungen aufweisen, welche zur Bearbeitung und/oder Behandlung und/oder Verarbeitung und/oder Zubereitung und/oder Lagerung von Nahrungsmitteln verwendet werden können. Das Nahrungsmittelzubereitungssystem kann zusätzlich zumindest ein Zubehörteil und/oder einen Satz an Zubehörteilen für die Zubereitung und/oder Verarbeitung und/oder Lagerung des Nahrungsmittels aufweisen, wie beispielsweise zumindest eine Schneideeinheit, eine Mixeinheit, eine Rühreinheit, ein Temperaturmessgerät, beispielsweise einen Bratspiess oder eine Temperatursonde, eine Aufnahmeeinheit zur Aufnahme des Nahrungsmittels, eine Kühleinheit zur Kühlung des Nahrungsmittels oder dergleichen.

Das Nahrungsmittelzubereitungssystem könnte ein Nahrungsmittelkühlsystem, beispielsweise ein Kältegerätesystem, sein, um beispielsweise Eis oder dergleichen zuzubereiten und/oder herzustellen. Bei dem Zubereitungsgerät könnte es sich beispielsweise um einen Gefrierschrank, eine Gefriertruhe, eine Eismaschine oder dergleichen handeln. Vorzugsweise ist das Nahrungsmittelzubereitungssystem als ein Nahrungsmittelgarsystem, und zwar beispielsweise als ein Kochfeldsystem, Backofensystem, Mikrowellensystem, Dampfgerätesystem, Grillgerätesystem und/oder Wasserkochsystem oder dergleichen, ausgebildet. Ist das Nahrungsmittelzubereitungssystem als das Nahrungsmittelgarsystem ausgebildet, handelt es sich bei dem Zubereitungsgerät vorteilhaft um ein Gargerät zur Garung von Nahrungsmitteln. Das Zubereitungsgerät könnte, ohne darauf beschränkt zu sein, als ein Kochfeld, insbesondere ein Induktionskochfeld, als ein Backofen, eine Mikrowelle, ein Dampfgerät, ein Grillgerät, ein Reiskocher, ein Kaffeekocher, ein Wasserkocher, ein Toaster, ein Waffeleisen und/oder eine Fritteuse ausgebildet sein. Besonders bevorzugt ist das Zubereitungsgerät als ein Eierkocher ausgebildet. Alternativ oder zusätzlich kann es sich bei dem Zubereitungsgerät um ein Zerkleinerungsgerät, beispielsweise einen Mixer, eine Mühle und/oder eine Schneidmaschine, um ein Rührgerät und/oder ein Mischgerät handeln. Denkbar wäre auch, dass das Zubereitungsgerät eine Multifunktions-Küchenmaschine ist. Insbesondere ist das Zubereitungsgerät ein Haushaltskleingerät, welches standortgebunden oder standortungebunden, vorteilhaft tragbar ist. Unter «standortungebunden» soll in diesem Zusammenhang verstanden werden, dass das ein Objekt, vorteilhaft das Zubereitungsgerät, in einer Umgebung durch einen Benutzer frei, und insbesondere ohne Hilfsmittel, positionierbar ist, insbesondere im Unterschied zu einem Haushaltsgrossgerät, wie beispielsweise einem Kühlschrank und/oder einem Einbaugerät, welches an einer bestimmten Position in einem Haushalt bzw. einer Küche fest positioniert und/oder installiert ist.

Das Zubereitungsgerät ist dazu vorgesehen, dass Nahrungsmittel in dem Zubereitungsprozess, insbesondere dem Garprozess, zuzubereiten, bevorzugt zu garen. Das Nahrungsmittel könnte Teil des Nahrungsmittelzubereitungssystems sein. Insbesondere ist das Nahrungsmittel ein Lebensmittel, welches zum menschlichen Verzehr geeignet ist. Bei dem Nahrungsmittel kann es sich um zumindest teilweise pflanzliche, tierische und/oder künstlich hergestellte Produkte und/oder Erzeugnisse handeln. Das Nahrungsmittel kann beispielsweise Fleisch, Fisch, Gemüse, Obst oder dergleichen sein. Vorzugsweise ist das Nahrungsmittel ein Ei-Produkt. Das Ei-Produkt kann ein tierisches Ei oder ein auf pflanzlicher und/oder künstlicher Basis hergestelltes Produkt sein. Es wäre denkbar, dass das Nahrungsmittelzubereitungssystem zumindest das Nahrungsmittel oder eine Vielzahl von Nahrungsmitteln aufweist. Das Zubereitungsgerät kann das Nahrungsmittel in dem Zubereitungsprozess auf unterschiedliche Stufen, bevorzugt Garstufen, garen. Beispielsweise kann das Zubereitungsgerät, welches insbesondere als Eierkocher ausgebildet ist, das Ei-Produkt auf verschiedene Härtegrade garen, sodass das Ei-Produkt beispielsweise zumindest teilweise flüssig, mittelhart oder hart zubereitet werden kann.

Vorliegend wird die Verwendung des Nahrungsmittelzubereitungssystems zur Zubereitung von Ei-Produkten in der Gastronomie vorgeschlagen. Um eine besonders benutzer- und/oder handhabungsfreundliche sowie komfortable Zubereitung des Nahrungsmittels zu gewährleisten, wird die Prozessleitvorrichtung für das zuvor bereits geschriebene Nahrungsmittelzubereitungssystem vorgeschlagen. Die Prozessleitvorrichtung kann den Zubereitungsprozess zur Zubereitung des Nahrungsmittels zumindest teilweise und vorzugsweise vollständig leiten, steuern und/oder regeln. Bevorzugt umfasst die Prozessleitvorrichtung eine Prozessleit-Steuereinheit. Unter einer «Steuereinheit» soll in diesem Dokument eine elektronische Einheit verstanden werden, die vorzugsweise dazu vorgesehen ist, zumindest eine Komponente des Nahrungsmittelzubereitungssystems zu steuern und/oder zu regeln. Vorteilhaft umfasst die Steuereinheit eine Recheneinheit, insbesondere einen Prozessor, und bevorzugt zusätzlich zur Recheneinheit eine Speichereinheit mit einem darin gespeicherten Steuer- und/oder Regelprogramm, das dazu vorgesehen ist, von der Recheneinheit ausgeführt zu werden. Die Speichereinheit kann als eine Speicherzelle, bevorzugt als ein Halbleiterspeicher, beispielsweise als EEPROM oder SRAM, zur Chip-Anwendung ausgebildet sein. Alternativ oder zusätzlich kann die Speichereinheit zumindest ein digitales Speichermedium, beispielsweise als eine Festplatte, SD-Karte zur Flash-Speicherung oder dergleichen aufweisen. Denkbar ist auch, dass die Speichereinheit als ein externer privater oder öffentlicher Server, beispielsweise ein privater oder öffentlicher Server im Internet, ausgebildet sein kann. Bei der Speichereinheit könnte es sich um eine private oder öffentliche Cloud handeln. Die Prozessleitvorrichtung könnte in zumindest einem Betriebszustand auf den externen Server oder die Cloud zugreifen.

Die Prozessleit-Steuereinheit kann dazu vorgesehen sein, eine Erfassung und/oder Ermittlung des Parametersatzes zu steuern und/oder zu regeln. Der Parameter des Nahrungsmittels kann beispielsweise, und zwar ohne darauf beschränkt zu sein, ein Temperaturparameter, ein Gewichtsparameter, ein Grössenparameter, ein Ausrichtungsparameter, ein Frischeparameter, ein Festigkeitsparameter, ein Zubereitungsparameter oder ein Zusammensetzungsparameter des Nahrungsmittels sein. Denkbar wäre auch, dass der Parametersatz mehrere Parameter des Nahrungsmittels, insbesondere den genannten Parameter des Nahrungsmittels und zumindest einen weiteren Parameter des Nahrungsmittels, umfasst. Beispielsweise kann der Parameter des Nahrungsmittels ein Gewichtsparameter sein, welcher sich auf das Ist-Gewicht des Nahrungsmittels bezieht und insbesondere angibt, wie schwer das Nahrungsmittel ist. Der weitere Parameter des Nahrungsmittels kann ein, insbesondere weiterer, Temperaturparameter sein, welcher sich auf die Ist-Temperatur des Nahrungsmittels vor der Zubereitung bezieht und insbesondre die Temperatur des Nahrungsmittels vor der Zubereitung angibt. Der Parametersatz könnte noch zumindest einen zusätzlichen Parameter umfassen, wie beispielsweise zumindest einen Parameter einer Umgebung der Prozessleitvorrichtung. Bei dem Parameter der Umgebung kann es sich beispielsweise um einen Temperaturparameter, welcher sich auf eine Temperatur der Umgebung bezieht, um einen Druckparameter, welcher sich auf einen Druck, insbesondere Luftdruck der Umgebung bezieht, um einen Lichtparameter, um einen Wetterparameter oder dergleichen handeln. Aus dem Temperaturparameter der Umgebung könnte eine Temperatur des Nahrungsmittels vor der Zubereitung abgeleitet und näherungsweise ermittelt werden.

Ferner kann der Parameter des Zubereitungsgeräts beispielsweise, und zwar ohne darauf beschränkt zu sein, ein Temperaturparameter, ein Gewichtsparameter, ein Heizleistungsparameter, ein Grössenparameter, ein Ausrichtungsparameter, ein Betriebsparameter oder Funktionsparameter sein. Der Parameter des Zubereitungsgeräts kann auch als ein Parameter eines Garmediums verstanden werden, welches sich in dem Zubereitungsgerät befindet. Bevorzugt handelt es sich bei dem Parameter des Zubereitungsgeräts um einen Temperaturparameter, welcher insbesondere eine Gartemperatur angibt. Bevorzugt gibt der Temperaturparameter eine Temperatur des Garmediums, wie beispielsweise eine Temperatur von Wasser oder Wasserdampf, welches/welcher sich in dem Zubereitungsgerät befindet, an. Denkbar wäre auch, dass der Parametersatz mehrere Parameter des Zubereitungsgeräts, insbesondere den genannten Parameter des Zubereitungsgeräts und zumindest einen weiteren Parameter des Zubereitungsgeräts, umfasst. Der weitere Parameter des Zubereitungsgeräts könnte ein, insbesondere weiterer, Gewichtsparameter sein und sich vorteilhaft auf ein Gewicht des Garmediums beziehen. Beispielsweise könnte der, insbesondere weitere, Gewichtsparameter eine Gewichtsangabe des Wassers, und damit eine Information aufweisen, wieviel Wasser sich in dem Zubereitungsgerät befindet.

Zumindest ein Parameter des Parametersatzes, insbesondere der Parameter des Nahrungsmittels und/oder der Parameter des Zubereitungsgeräts, kann ein relativer Parameter sein, welcher sich aus einer gemessenen und/oder ermittelten Grösse ergeben kann. Bevorzugt ist die Prozessleit-Steuereinheit dazu vorgesehen, zumindest einen Parameter des Parametersatzes, insbesondere den Parameter des Nahrungsmittels und/oder zumindest den Parameter des Zubereitungsgeräts, basierend auf einer erfassten und/oder gemessenen physikalischen Grösse und/oder Eigenschaft des Nahrungsmittels und/oder des Zubereitungsgeräts, insbesondere des Garmediums, zu ermitteln und/oder zu bestimmen. Insbesondere berücksichtigt die Prozessleitvorrichtung bei Berechnung der Zubereitungskenngrösse den Parametersatz, und zwar zumindest den Parameter des Nahrungsmittels und zumindest den Parameter des Zubereitungsgeräts. Vorteilhaft führt die Prozessleit-Steuereinheit die Berechnung zumindest der Zubereitungskenngrösse, insbesondere anhand von zumindest dem Parametersatz, durch. Die Zubereitungskenngrösse kann beispielsweise eine Zubereitungstemperatur, eine Zubereitungsgarstufe, ein Zubereitungsgewicht, ein Zubereitungsbereich, eine Zubereitungsposition, eine Zubereitungssituation des Nahrungsmittels, insbesondere der Härtegrad des Nahrungsmittels, oder dergleichen sein.

Um einen besonders komfortables, effektives und handhabungsfreundliches Nahrungsmittelzubereitungssystem bereitzustellen, wird vorgeschlagen, dass die Zubereitungskenngrösse eine Zubereitungsdauer ist. Die Zubereitungsdauer kann in Sekunden, Minuten und/oder Stunden messbar und/oder berechenbar sein. Insbesondere gibt die Zubereitungsdauer die Dauer des Zubereitungsprozesses, insbesondere des Garprozesses, zur Zubereitung des Nahrungsmittels an. Bevorzugt gibt die Zubereitungsdauer die Dauer jener Zubereitung an, wie lange das Ei-Produkt gegart werden muss, um einen bestimmten Härtegrad zu erreichen.

Die Prozessleitvorrichtung und das Zubereitungsgerät könnten einstückig, insbesondere einteilig, ausgebildet sein. Unter «einstückig» soll zumindest stoffschlüssig verbunden verstanden werden, beispielsweise durch einen Klebeprozess, einen Anspritzprozess und/oder Schweißprozess und/oder einen anderen, dem Fachmann als sinnvoll erscheinenden Prozess. Ferner soll unter «einteilig» in einem Stück/in einer Einheit geformt/ausgebildet verstanden werden. Das Zubereitungsgerät und die Prozessleitvorrichtung könnten gemeinsam eine Baueinheit ausbilden. Vorzugsweise umfasst die Prozessleitvorrichtung eine Kopplungseinheit zur lösbaren Verbindung mit dem Zubereitungsgerät. Die Prozessleitvorrichtung und das Zubereitungsgerät können beispielsweise mittels einer kraft- und/oder formschlüssigen Verbindung, wie beispielsweise einer Rastverbindung und/oder Steckverbindung und/oder Drehverbindung und/oder Schraubverbindung und/oder Klemmverbindung und/oder Klettverbindung, miteinander verbunden sein. Bevorzugt weist die Kopplungseinheit zumindest ein Formschlusselement zur lösbaren Fixierung mit dem Zubereitungsgerät auf. Die Prozessleitvorrichtung kann auf/an das zubereitungsgerät steckbar und/der klemmbar sein. Denkbar wäre, dass die Prozessleitvorrichtung mit mehreren, und zwar mit zumindest zwei, vorteilhaft unterschiedlichen, Zubereitungsgeräten des Nahrungsmittelzubereitungssystems, insbesondere gleichzeitig oder nacheinander, koppelbar ist. Je nach Einsetzungsbedarf des Benutzers könnte die Prozessleitvorrichtung mit dem bereits genannten Zubereitungsgerät, beispielsweise dem Eierkocher, oder mit zumindest einem von dem Zubereitungsgerät verschieden ausgebildeten weiteren Zubereitungsgerät, beispielsweise einem Toaster, koppelbar sein. Damit kann eine hohe Flexibilität und ein gesteigerter Benutzerkomfort bereitgestellt werden.

Vorteilhaft umfasst das Zubereitungsgerät eine Geräte-Steuereinheit. Insbesondere ist die Geräte-Steuereinheit dazu vorgesehen, zumindest eine Funktion des Zubereitungsgeräts zu steuern und/oder zu regeln. Beispielsweise kann die Geräte-Steuereinheit zumindest einen Heizvorgang, einen Nahrungsmittelbearbeitungsvorgang oder eine andere Gerätefunktion des Zubereitungsgeräts steuern und/oder regeln. Das Zubereitungsgerät kann zumindest eine Heizeinheit aufweisen. Insbesondere ist die Heizeinheit dazu vorgesehen, dass Garmedium, bevorzugt das Wasser, zu erhitzen, um damit das Nahrungsmittel zu garen. Vorteilhaft steuert und/oder regelt die Geräte-Steuereinheit zumindest die Heizeinheit. Die Heizeinheit kann zumindest einen Heizstab, und zwar zumindest ein Widerstandsheizelement und/oder zumindest ein induktives Heizelement, wie beispielsweise eine Induktionsspule, aufweisen. Die Geräte-Steuereinheit kann die Heizeinheit zumindest in dem Zubereitungsprozesses aktivieren und zur Beheizung ansteuern. Insbesondere steuert und/oder regelt die Geräte-Steuereinheit die Heizeinheit zumindest während der Zubereitungsdauer. Denkbar wäre, dass die Geräte-Steuereinheit die Heizeinheit lediglich in Abhängigkeit der Zubereitungsdauer aktiviert und nach Beenden des Zubereitungsprozesses insbesondere automatisch deaktiviert. Bevorzugt aktiviert die Geräte-Steuereinheit die Heizeinheit bereits vor Beginn der Zubereitung des Nahrungsmittels, insbesondere vor der Zubereitungsdauer, um vorteilhaft ein erhitztes/aufgeheiztes Garmedium, insbesondere heisses Wasser, zur Zubereitung des Nahrungsmittels bereits zu Beginn des Zubereitungsprozesses bereitzustellen. Alternativ kann ein Aufheizvorgang zur Aufheizung des Garmediums auch erst während des Zubereitungsprozesses durchführbar sein, wobei sich das Nahrungsmittel während des Aufheizvorgangs möglicherweise zumindest teilweise bereits in und/oder oberhalb des Garmediums befinden könnte.

Das Zubereitungsgerät weist zumindest ein Aufnahmebehältnis zur Aufnahme zumindest des Nahrungsmittels auf. Bevorzugt ist der Aufnahmebehälter dazu vorgesehen, zumindest das Garmedium und insbesondere das Nahrungsmittel aufzunehmen. In dem Zubereitungsprozess kann sich das Nahrungsmittel in dem Garmedium zumindest teilweise oder vollständig befinden und/oder angeordnet sein. Das Aufnahmebehälter kann beispielsweise als Topf, Schale, Schüssel oder als irgendein anderes Gefäss ausgebildet sein. Ferner kann das Zubereitungsgerät zumindest eine Halteeinheit zur Halterung des Nahrungsmittels aufweisen. Insbesondere ist die Halteeinheit dazu vorgesehen, dass Nahrungsmittel zumindest teilweise oder zumindest zu einem Grossteil oder vollständig aufzunehmen, zu halten und/oder zu tragen. Die Halteeinheit kann zumindest teilweise, zumindest zu einem Grossteil oder vollständig aus einem Mineral, beispielsweise Glas oder Stein, und/oder Kunststoff und/oder Metall, wie beispielsweise Edelstahl, und/oder einem Verbundmaterial ausgebildet sein. Unter dem Ausdruck «zu einem Grossteil» sollen vorliegend beispielsweise zumindest 55 %, vorteilhaft zumindest 65 %, vorzugsweise zumindest 75 %, besonders bevorzugt zumindest 85 % und besonders vorteilhaft höchstens 95 % eines Volumen- und/oder Massenanteils eines Objekts verstanden werden.

Die Halteeinheit kann zumindest einen Haltebereich zur Halterung des Nahrungsmittels aufweisen. In einem eingesetzten Zustand kann das Nahrungsmittel zumindest teilweise oder vollständig in dem Haltebereich positioniert sein und von der Halteeinheit aufgenommen werden. Die Halteeinheit kann zumindest 10 %, vorteilhaft zumindest 20 % und bevorzugt zumindest 30 % des Nahrungsmittels, insbesondere des Volumens des Nahrungsmittels, aufnehmen. Ferner könnte die Halteeinheit höchstens 80 %, vorteilhaft höchstens 70 % und vorzugsweise höchstens 50 % des Nahrungsmittels, insbesondere des Volumens des Nahrungsmittels, aufnehmen. Zur Fixierung des Nahrungsmittels kann die Halteeinheit zumindest eine Fixiereinheit aufweisen, welche dazu vorgesehen ist, das Nahrungsmittel in dem Haltebereich zu fixieren und beispielsweise vor einem herausfallen, umkippen, raustreiben, insbesondere bei Anordnung in dem Garmedium, oder dergleichen zu schützen. Die Fixiereinheit könnte einstückig oder einteilig mit einem Gerüstelement der Halteeinheit ausgebildet sein. Vorliegend soll unter «einteilig» in einem Stück geformt verstanden werden, wobei dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, und/oder in einem Stanzverfahren und/der in einem Blechbiegeprozess und/oder in einem Druckprozess, beispielsweise einem 3D-Druckprozesses, und/oder mittels Thermoformen oder vorteilhaft mittels eines Tiefziehprozesses und/oder einem anderen dem Fachmann als sinnvoll erscheinenden Verfahren aus dem einzelnen Rohling hergestellt wird.

Denkbar wäre auch, dass die Fixiereinheit getrennt von dem Gerüstelement der Halteeinheit ausgebildet ist. Die Fixiereinheit könnte reversibel mit dem Gerüstelement verbindbar sein. Vorteilhaft definiert und/oder begrenzt das Gerüstelement den Haltebereich zur Halterung des Nahrungsmittels. Nach Anordnung des Nahrungsmittels in dem Haltebereich, könnte die Fixiereinheit zusätzlich an dem Gerüstelement positionierbar/anordenbar sein, um das Nahrungsmittel in dem Haltebereich, insbesondere zumindest für die Dauer der Zubereitung, zu fixieren. Ferner kann die Halteeinheit zumindest ein Griffelement aufweisen. Insbesondere ist das Griffelement zur Halterung und/oder Betätigung durch den Benutzer vorgesehen. An dem Griffelement kann der Benutzer die Halteeinheit halten und/oder greifen, um diese zu bewegen und um beispielsweise das Nahrungsmittel in dem Haltebereich zu platzieren und/oder anzuordnen.

Das Zubereitungsgerät kann eine Mehrzahl von Halteeinheiten, und zwar zumindest zwei Halteeinheiten, insbesondere eine erste Halteeinheit und zumindest eine zweite Halteeinheit, aufweisen. Die Halteeinheiten sind vorteilhaft zumindest im Wesentlichen konstruktionell identisch zueinander ausgebildet, und zwar unabhängig von Fertigungstoleranzen. Zur Unterscheidung der Mehrzahl von Halteeinheiten, insbesondere der ersten Halteeinheit und zumindest der zweiten Halteeinheit, untereinander, kann jede Halteeinheit zumindest ein Kennzeichnungselement aufweisen. Die erste Halteeinheit kann ein ersten Kennzeichnungselement und die zweite Halteeinheit kann ein zweites Kennzeichnungselement aufweisen. Bevorzugt weist das Griffelement das Kennzeichnungselement auf. Insbesondere ist das Kennzeichnungselement ist dazu vorgesehen, die Halteeinheit für den Benutzer zu identifizieren und/oder zu kennzeichnen. Ohne darauf beschränkt zu sein, kann das Kennzeichnungselement zumindest eine farbige und/oder strukturierte Sichtoberfläche aufweisen. Das erste Kennzeichnungselement kann eine unterschiedlich farbige und/oder strukturierte Sichtoberfläche zu dem zweiten Kennzeichnungselement aufweisen. Denkbar wäre auch, dass das Kennzeichnungselement zumindest eine Anzeigeeinheit, beispielsweise ein Display oder eine Leuchteinheit, wie eine LED, zur Anzeige zumindest einer Information aufweist. Das Kennzeichnungselement kann auch als eine Nummer, ein Zeichen und/oder ein Symbol ausgebildet sein, welche auf dem Griffelement angeordnet sein kann, um die Halteeinheit zu kennzeichnen.

Das Nahrungsmittelzubereitungssystem kann eine Mehrzahl von Informationseinheiten, beispielsweise zumindest zwei, drei, fünf oder acht Informationseinheiten, aufweisen. Die Informationseinheiten können zueinander identisch ausgebildet sein, und zwar unabhängig von Fertigungstoleranzen. Nachfolgend wird lediglich eine Informationseinheit beschrieben, wobei die Ausführungen auch auf die anderen Informationseinheiten übertragbar sind, sofern nicht anders angegeben. Insbesondere ist die tragbare Informationseinheit dazu vorgesehen, dem Benutzer zumindest einen Überblick über den Zubereitungsprozess des Nahrungsmittels zu verschaffen, und zwar zumindest mit der Ausgabe des aktuellen Werts der Zubereitungskenngrösse. Unter einer «tragbaren Informationseinheit» soll vorliegend auch eine «standortungebundene Informationseinheit» verstanden werden. Die Informationseinheit kann neben der Zubereitungskenngrösse noch weitere Informationen und/oder Daten von der Prozessleitvorrichtung empfangen und vorteilhaft diese dem Benutzer ausgeben. Die Informationseinheit und die Prozessleitvorrichtung können drahtgebunden und/oder bevorzugt drahtlos miteinander kommunizieren. Der aktuelle Wert der Zubereitungskenngrösse ist vorzugsweise ein aktueller Zeitwert der Zubereitungsdauer. Insbesondere gibt die Informationseinheit eine Zubereitungszeit aus. Die Ausgabe des aktuellen Werts der Zubereitungskenngrösse, insbesondere der Zubereitungsdauer, kann, ohne darauf beschränkt zu sein, in Stunden, Minuten und/oder Sekunden erfolgen. Bevorzugt ist die Ausgabe des aktuellen Werts der Zubereitungsdauer eine Ausgabe einer Zubereitungszeit. Die Informationseinheit kann den Benutzer über den Ablauf der Zubereitungszeit informieren und den Ablauf der Zubereitungszeit ausgeben. Vorzugsweise fungiert die Informationseinheit zumindest als ein Timer und/oder eine Eieruhr. Denkbar wäre jedoch auch, dass die Informationseinheit mehrere aktuelle Werte von Zubereitungskenngrössen, und zwar zumindest zwei aktuelle Werte von Zubereitungskenngrössen insbesondere gleichzeitig ausgibt. Bei der, insbesondere einer ersten, Zubereitungskenngrösse kann es sich um die bereits genannte Zubereitungsdauer handeln. Bei einer weiteren, insbesondere einer zweiten, Zubereitungskenngrösse kann es sich um die Zubereitungssituation des Nahrungsmittels, insbesondere den Härtegrad des Nahrungsmittels, handeln. Insbesondere gibt die Informationseinheit den aktuellen Wert der Zubereitungssituation des Nahrungsmittels, vorteilhaft den aktuellen Wert des Härtegrads des Nahrungsmittels, aus, beispielsweise anhand von Bildern, Symbolen und/oder Zeichen.

Unter «vorgesehen» soll in diesem Dokument speziell programmiert, ausgelegt, ausgebildet und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt. Ferner dienen im vorliegenden Dokument Zahlwörter, wie beispielsweise «erste/r/s» und «zweite/r/s» sowie die Ausdrücke «weitere/s», welche bestimmten Begriffen vorangestellt sind, lediglich zu einer Unterscheidung von Verfahrensschritten und/oder Objekten und/oder einer Zuordnung zwischen Objekten untereinander und implizieren keine vorhandene Gesamtanzahl und/oder Rangfolge der Objekte und/oder der Verfahrensschritte. Insbesondere impliziert ein «zweites»/«weiteres» Objekt und/oder Verfahrensschritt nicht zwangsläufig ein Vorhandensein eines «ersten» Objekts und/oder Verfahrensschritts.

Ferner wird vorgeschlagen, dass das Nahrungsmittelzubereitungssystem zumindest eine Sensoreinheit aufweist, welche dazu vorgesehen ist, zumindest eine physikalische Grösse und/oder eine physikalische Eigenschaft zur Ermittlung zumindest eines Parameters des Parametersatzes zu messen. Hierdurch kann ein Benutzerkomfort weiter verbessert sowie eine Effizienz, insbesondere eine Prozesseffizienz, gesteigert werden, da mittels Sensierung und/oder Ermittlung zumindest eines Parameters eine Zubereitung eines Nahrungsmittels optimiert, und zwar individueller, abgestimmter und/oder benutzerfreundlicher gestaltet werden kann. Ferner kann damit eine verbessertes Zubereitungsergebnis des Nahrungsmittels erreicht werden, was wiederum zur Steigerung des Benutzerkomforts beiträgt.

Unter einer «Sensoreinheit» soll in diesem Zusammenhang eine Einheit verstanden werden, die dazu vorgesehen ist, zumindest eine physikalische Grösse und/oder eine physikalische Eigenschaft zu sensiren, wobei die Aufnahme aktiv, wie insbesondere durch Erzeugen und Aussenden eines elektrischen Messsignals, und/oder passiv, wie insbesondere durch eine Erfassung von Eigenschaftsänderungen eines Sensorbauteils, stattfinden kann. Es sind verschiedene, dem Fachmann als sinnvoll erscheinende Sensoreinheiten und Sensorelemente denkbar. Die Sensoreinheit kann zumindest teilweise oder vollständig Teil der Prozessleitvorrichtung sein. Ferner ist denkbar, dass die Sensoreinheit zumindest teilweise oder vollständig Teil des Zubereitungsgeräts ist. Vorzugsweise weist die Sensoreinheit zumindest ein Sensorelement auf, welches Teil der Prozessleitvorrichtung ist. Alternativ oder zusätzlich kann die Sensoreinheit zumindest ein Sensorelement aufweisen, welches Teil des Zubereitungsgeräts ist. Die Sensoreinheit kann noch weitere Sensorelemente aufweisen, welche Teil der Prozessleitvorrichtung, des Zubereitungsgeräts und/oder der tragbaren Informationseinheit sind. Bei dem Sensorelement kann es sich, ohne darauf beschränkt zu sein, um einen mechanischen Sensor, beispielsweise ein Manometer, Dehnungshebel, Federwaage, Hebelwaage, einen Gewichtssensor oder Thermometer, um einen thermoelektrischen Sensor, beispielsweise ein Thermoelement, einen Heissleiter oder einen Thermoschalter, um einen resistiven Sensor, beispielsweise einen Hitzedraht, um einen IR-Sensor, um einen piezoelektrischen Sensor, beispielsweise einen Beschleunigungssensor, um einen kapazitiven Sensor, beispielsweise einen Drucksensor oder Luftfeuchtsensor, um einen induktiven Sensor, beispielsweise einen Kraftsensor, um einen optischen Sensor, beispielsweise einen CCD-Sensor, eine Fotozelle oder eine Kamer, um einen akustischen Sensor, beispielsweise einen Füllstandsensor, einen Doppelbogenkontrolle oder Ultraschall-Durchflussmesser, oder um einen magnetischen Sensor, beispielsweise Hall-Sensoren oder Reed-Kontakt, handeln.

Bevorzugt umfasst die Sensoreinheit zumindest ein Temperatursensorelement zur Erfassung einer Temperatur des Nahrungsmittels und/oder des Zubereitungsgeräts, insbesondere des Garmediums in dem Zubereitungsgerät. Die Prozessleitvorrichtung kann ein Temperatursensorelement der Sensoreinheit aufweisen, welcher dazu vorgesehen ist, eine Umgebungstemperatur zu erfassen und/oder zu sensieren. Denkbar wäre auch, dass das genannte Temperatursensorelement der Prozessleitvorrichtung oder ein zusätzliches Temperatursensorelement der Prozessleitvorrichtung eine Ist-Temperatur des Nahrungsmittels erfassen und/oder sensieren kann. Denkbar wäre auch, dass das Prozessleitvorrichtung zumindest ein Sensorelement der Sensoreinheit zur Sensierung eines Umgebungsluftdrucks aufweist. Ferner kann die Sensoreinheit zumindest ein weiteres Temperatursensorelement aufweisen, welcher Teil des Zubereitungsgeräts ist. Das weitere Temperatursensorelement kann dazu vorgesehen, zumindest eine Temperatur des Garmediums, insbesondere des Wassers, zu sensieren und/oder zu erfassen. Ferner weist die Sensoreinheit vorzugsweise zumindest einen Gewichtssensorelement auf, welcher Teil der Prozessleitvorrichtung und dazu vorgesehen sein kann, ein Gewicht des Nahrungsmittels zu erfassen und/oder zu sensieren. Die Prozessleitvorrichtung kann zumindest eine Aufnahmeeinheit zur zumindest teilweisen Aufnahme des Nahrungsmittels aufweisen. Das Nahrungsmittel kann in die Aufnahmeeinheit einsetzbar sein, um von zumindest einem Sensorelement der Sensoreinheit sensiert zu werden. Bevorzugt ist zumindest das Gewichtssensorelement in der Aufnahmeeinheit eingebaut und/oder darin integriert, sodass bei Positionierung des Nahrungsmittels in und/oder auf der Aufnahmeeinheit, das Gewicht des Nahrungsmittels von dem Gewichtssensorelement sensierbar und/oder erfassbar ist. Vorteilhaft sensiert das Temperatursensorelement der Prozessleitvorrichtung die Temperatur des Nahrungsmittels, wenn dieses in und/oder auf der Aufnahmeeinheit positioniert ist. Bevorzugt weist das Zubereitungsgerät zumindest ein weiteres Gewichtssensorelement der Sensoreinheit auf, welches dazu vorgesehen ist, ein Gewicht des Garmediums zu sensieren und/oder zu erfassen. Das weitere Gewichtssensorelement kann das Gewicht des Garmediums vor, während und/oder nach dem Zubereitungsprozess des Nahrungemittels sensieren. Denkbar ist auch, dass die Sensoreinheit zumindest ein optisches Sensorelement aufweist, welches Teil der Prozessleitvorrichtung sein kann. Das optische Sensorelement, welches beispielsweise als Kamera ausgebildet sein kann, kann zur optischen Sensierung und/oder Erfassung zumindest des Nahrungsmittels vorgesehen sein. Das optische Sensorelement kann zumindest eine Position und/oder Lage und/oder Ausgestaltung und/oder Grösse und/oder Form des Nahrungsmittels sensieren und/oder erfassen. Bevorzugt erfasst und/oder sensiert das optische Sensorelement zumindest die Position und/oder Lage und/oder Ausgestaltung und/oder Grösse und/oder Form des Nahrungsmittels, wenn dieses in und/oder auf der Aufnahmeeinheit positioniert ist.

Wie bereits erläutert, kann die Prozessleit-Steuereinheit dazu vorgesehen sein, zumindest einen Parameter des Parametersatzes, insbesondere zumindest den Parameter des Nahrungsmittels und zumindest den Parameter des Zubereitungsgeräts, basierend auf einer erfassten und/oder gemessenen Grösse des Nahrungsmittels und des Zubereitungsgeräts zu ermitteln und/oder zu bestimmen. Die Prozessleit-Steuereinheit kann aus der von dem Gewichtssensorelement sensierten physikalischen Grösse des Nahrungsmittels, und zwar dem Gewicht des Nahrungsmittels den Gewichtsparameter ermitteln. Ferner kann die Prozessleit-Steuereinheit dazu vorgesehen sein, aus der von dem Temperatursensorelement sensierten physikalischen Grösse der Umgebung, und zwar der Temperatur der Umgebung, den Temperaturparameter der Umgebung zu ermitteln. Mittels der sensierten physikalischen Grösse des Nahrungsmittels, und zwar der Position und/oder Lage und/oder Ausgestaltung und/oder Grösse und/oder Form des Nahrungsmittels durch das optische Sensorelement kann die Prozessleit-Steuereinheit vorteilhaft dazu vorgesehen, zumindest einen weiteren Parameter des Nahrungsmittels zu ermitteln, welcher vorzugsweise Teil des Parametersatzes ist und zusätzlich bei der Berechnung der Zubereitungskenngrösse heranzuziehen ist.

Ausserdem wird vorgeschlagen, dass die Prozessleitvorrichtung dazu vorgesehen ist, das Zubereitungsgerät basierend auf zumindest einem Parameter des Parametersatzes anzusteuern und/oder zu regeln. Damit kann ein Zubereitungsprozess weiter optimiert, effizienter und individueller basierend auf zumindest einem ermittelten Parameter durchgeführt werden. Ausserdem kann mittels der Prozessleitvorrichtung eine zentrale Steuerung und/oder Regelung einer Zubereitung des Nahrungsmittels bereitgestellt werden.

Die Prozessleitvorrichtung kann das Zubereitungsgerät in zumindest einem Betriebszustand ansteuern und/oder regeln. Die Prozessleitvorrichtung kann die Beheizung des Garmediums, insbesondere des Wassers, steuern und/oder regeln. Insbesondere ist die Prozessleit-Steuereinheit dazu vorgesehen, das Zubereitungsgerät basierend auf dem Parameter des Nahrungsmittels und/oder zumindest dem Parameter des Zubereitungsgeräts anzusteuern. Bevorzugt übermittelt die Prozessleit-Steuereinheit in zumindest dem Betriebszustand zumindest einen Steuerbefehl an die Geräte-Steuereinheit, welche vorteilhaft die Heizeinheit entsprechend dem Steuerbefehl ansteuert. Insbesondere übermittelt die Prozessleit-Steuereinheit an die Geräte-Steuereinheit eine Soll-Temperatur für das Garmedium. Basierend auf dem Wert der Soll-Temperatur kann die Geräte-Steuereinheit die Heizeinheit ansteuern, und zwar insbesondere ein Aufheizen des Garmediums steuern und/oder regeln, bis dieses die Soll-Temperatur erreicht hat. Die Prozessleitvorrichtung kann das Zubereitungsgerät in Abhängigkeit des Parameters des Zubereitungsgeräts, insbesondere des Temperaturparameters, in zumindest dem Betriebszustand ansteuern und/oder regeln. Bevorzugt steuert und/oder regelt die Prozessleit-Steuereinheit in zumindest dem Betriebszustand, vorteilhaft vor und/oder während und/oder nach dem Zubereitungsprozess, zumindest den Heizvorgang, und zwar die Beheizung des Garmediums, und zwar in Abhängigkeit von zumindest dem Parameter des Zubereitungsgeräts, insbesondere des Temperaturparameters. Die Heizeinheit kann zumindest während des Zubereitungsprozesses derart angesteuert und/oder geregelt werden, dass das Garmedium eine Temperatur von zumindest 85° Celsius, vorteilhaft zumindest 90° Celsius und vorzugsweise zumindest 95° Celsius aufweist. Ferner beträgt die Temperatur des Garmediums während dem Zubereitungsprozess vorteilhaft höchstens 100° Celsius und vorzugsweise höchstens 98° Celsius. Besonders bevorzugt liegt die Temperatur des Garmediums zumindest während des Zubereitungsprozesses unterhalb eines Siedepunkts, beispielsweise unterhalb von 100° Celsius.

Des Weiteren wird vorgeschlagen, dass die Prozessleitvorrichtung zumindest eine Benutzerschnittstelle aufweist. Dadurch kann eine direkte und/oder unmittelbare Kommunikation mit einem Benutzer ermöglicht werden, sodass dadurch wiederum ein Benutzerkomfort gesteigert werden kann. Unter einer «Benutzerschnittstelle» soll vorliegend eine Einheit verstanden werden, die zumindest ein Bauteil aufweist, welches direkt und/oder unmittelbar mit dem Benutzer kommuniziert und vorteilhaft von dem Benutzer betätigbar und/oder bedienbar ist. Dieses Bauteil kann ferner dazu vorgesehen sein, durch eine Betätigung und/oder durch eine Eingabe von Parametern einen Prozess und/oder einen Zustand einer mit der Benutzerschnittstelle gekoppelten Einheit zu beeinflussen und/oder zu ändern.

Die Benutzerschnittstelle kann akustisch, optisch und/oder haptisch mit dem Benutzer kommunizieren. Bevorzugt weist die Benutzerschnittstelle zumindest ein Eingabeelement auf. Insbesondere ist das Eingabeelement dazu vorgesehen, bei einem Bedienvorgang eine Eingabegrösse von dem Benutzer aufzunehmen und insbesondere unmittelbar von dem Bediener kontaktiert zu werden, wobei ein Berühren des Eingabeelements detektiert und/oder eine auf das Eingabeelement ausgeübte Betätigungskraft detektiert und/oder mechanisch zu Betätigung einer Einheit weitergleitet wird. Das Eingabeelement kann als ein mechanisches Eingabeelement ausgebildet sein. Alternativ oder zusätzlich ist denkbar, dass das Eingabeelement als ein berührungsempfindliches Eingabeelement, insbesondere als kapazitiver Sensor, beispielsweise als Touch-Eingabeelement, ausgebildet sein kann. Ferner kann das Eingabeelement auch ein sprachbasiertes Eingabeelement sein, wobei der Benutzer sprachlich Eingaben tätigen und/oder Einstellungen vornehmen kann. Darüber hinaus sind weitere dem Fachmann als sinnvoll erscheinende Eingabeelemente denkbar. Bei dem mechanischen Eingabeelement kann es sich beispielsweise um einen Joy-Stick, eine Disc, ein Bedienhebel und/oder eine Tastatur handeln. Vorteilhaft weist die Benutzerschnittstelle zumindest ein Display, insbesondere einen Touch-Display, auf. Das Display kann Informationen dem Benutzer zumindest optisch übermitteln und ausgeben. Der Benutzer kann Einstellungen und/oder Eingaben über den Touch-Display vornehmen und/oder tätigen. Vorteilhaft weist die Benutzerschnittstelle zumindest eine akustische Ausgabeeinheit zur akustischen Ausgabe von Informationen an den Benutzer auf. Insbesondere ist die Prozessleit-Steuereinheit dazu vorgesehen, eine Ausgabe von Informationen an den Benutzer über die Benutzerschnittstelle zu steuern und/oder zu regeln. Ferner ist die Prozessleit-Steuereinheit ist dazu vorgesehen, eine Eingabe von Informationen von dem Benutzer über die Benutzerschnittstelle zu empfangen und zu verarbeiten. Vorzugsweise ist die Benutzerschnittstelle dazu vorgesehen, während des Zubereitungsprozesses mit dem Benutzer zu kommunizieren und diesen durch den Zubereitungsprozess zu führen. Mittels der Benutzerschnittstelle kann die Prozessleit-Steuereinheit eine Anleitung und/oder Führung durch den Zubereitungsprozess an den Benutzer ausgeben. Ferner können mittels der Benutzerschnittstelle Warnungen, Hinweise, Störungen und/oder Fehlermeldungen an den Benutzer ausgegeben werden, um ihn auf eine Störung und/oder einen Fehler während des Zubereitungsprozesses hinzuweisen. Beispielsweise kann die Benutzerschnittstelle den Benutzer darauf hinweisen, dass das Garmedium, insbesondere das Wasser, in dem Zubereitungsgerät verbraucht ist und nachgefüllt werden muss. Die Prozessleit-Steuereinheit kann anhand des von dem weiteren Gewichtssensorelement des Zubereitungsgeräts sensierten Gewichts des Garmediums einen Verbrauch des Garmediums ermitteln.

Zudem wird vorgeschlagen, dass der Parametersatz zumindest einen benutzerdefinierbaren Parameter umfasst. Hierdurch kann ein Zubereitungsprozess eines Nahrungsmittels noch individueller und abgestimmter auf die Bedürfnisse, Wünsche und/oder Vorlieben eines Benutzers durchgeführt werden. Damit kann wiederum ein Komfort, und zwar ein Benutzerkomfort gesteigert und ein für den Benutzer optimales Zubereitungsergebnis des Nahrungsmittels erreicht werden. Insbesondere handelt es sich bei dem benutzerdefinierbaren Parameter um einen Parameter, welcher individuell auf den Benutzer definiert und/oder abgestimmt ist. Denkbar wäre, dass der benutzerdefinierbaren Parameter in der Prozessleit-Steuereinheit gespeichert und einem bestimmten Benutzer zugeordnet ist. Beim Starten des Zubereitungsprozesses könnte der Benutzer, beispielsweise mittels der Benutzerschnittstelle, auf den gespeicherten benutzerdefinierbaren Parameter zugreifen und dieses auswählen oder verändern. Ferner könnte der Benutzer vor, während und/oder nach dem Zubereitungsprozess Änderungen an den gespeicherten Informationen der Prozessleit-Steuereinheit vornehmen und beispielsweise den benutzerdefinierbaren Parameter speichern und hinterlegen. Bei dem benutzerdefinierbaren Parameter kann es sich beispielsweise um eine Zubereitungsart des Nahrungsmittels, eine Garstufe des Nahrungsmittels, einen Rezeptschritt oder dergleichen handeln. Besonders bevorzugt ist der benutzerdefinierbare Parameter ein Härtegrad des Ei-Produkts.

Wenn die Benutzerschnittstelle zur Eingabe des benutzerdefinierbaren Parameters vorgesehen ist, kann ein einfaches und kompaktes System zur Kommunikation mit einem Benutzer bereitgestellt werden. Ferner kann ein Komfort für den Benutzer gesteigert werden, da dieser auf unkomplizierte, einfache und intuitive Art und Weise hinsichtlich des Zubereitungsprozesses Einstellungen vornehmen und/oder Eingaben tätigen kann. Der Benutzer kann mittels der Benutzerschnittstelle den benutzerdefinierbaren Parameter eingeben, einstellen oder aus einer vorgeschlagenen Auswahl auswählen. Denkbar wäre auch, dass der Benutzer den benutzerdefinierbaren Parameter mittels eines Auswahlbalkens, eines Auswahldiagramms, einer Auflistung oder aus einer Dropdown-Liste oder dergleichen auswählen/einstellen kann. Die Prozessleit-Steuereinheit kann eine Auswahl von zumindest zwei oder mehreren Zubereitungsparametern dem Benutzer mittels der Benutzerschnittstelle vorschlagen. Die vorgeschlagenen Zubereitungsparameter können in der Prozessleit-Steuereinheit voreingestellt und gespeichert sein oder von der Prozessleit-Steuereinheit berechnet und/oder ermittelt werden. Die Prozessleit-Steuereinheit könnte zumindest einen Zubereitungsparameter basierend auf einer von der Sensoreinheit erfassten physikalischen Grösse des Nahrungsmittels und/oder des Zubereitungsgeräts berechnen und/oder ermitteln. Vorzugsweise schlägt die Prozessleit-Steuereinheit mittels der Benutzerschnittstelle dem Benutzer verschiedene Garstufen, insbesondere Härtegrade, des Nahrungsmittels, insbesondere des Ei-Produkts, aus denen der Benutzer auswählen kann vor. Der Benutzer kann mittels der Benutzerschnittstelle die Garstufe des Nahrungsmittels, insbesondere den Härtegrad des Ei-Produkts, definieren und bevorzugt damit einstellen, wie hart das Ei-Produkt in dem Zubereitungsprozess gegart werden soll, beispielsweise weich, mittel-hart oder hart. In Abhängigkeit von der Eingabe des Benutzers kann die Prozessleit-Steuereinheit den benutzerdefinierbaren Parameter ermitteln. Die Prozessleit-Steuereinheit berücksichtigt den benutzerdefinierbaren Parameter bei Berechnung zumindest der Zubereitungskenngrösse, bevorzugt der Zubereitungsdauer. Insbesondere je härter das Ei-Produkt gegart werden soll, desto länger dauert der Zubereitungsprozess und entsprechend hoch ist die Zubereitungsdauer. Die Benutzerschnittstelle kann dazu vorgesehen sein, die Zubereitungskenngrösse, insbesondere die Zubereitungsdauer, an den Benutzer auszugeben.

Um eine Prozesseffizienz zu steigern und ein flexiblen, komfortables und benutzerfreundliches Nahrungsmittelzubereitungssystem bereitzustellen, wird vorgeschlagen, dass das Nahrungsmittelzubereitungssystem eine Kommunikationseinheit zur drahtlosen Kommunikation zwischen zumindest zwei Komponenten des Nahrungsmittelzubereitungssystem aufweist. Die Kommunikationseinheit ist vorzugsweise zu einer bidirektionalen drahtlosen Datenübertragung, das heisst sowohl zu einem drahtlosen Empfang als auch zu einem drahtlosen Senden von Daten, vorgesehen. Vorzugsweise weist die Kommunikationseinheit zumindest ein Kommunikationselement auf, welches mit einer Steuereinheit verbunden und insbesondere zu einem drahtlosen Empfangen und Senden von Daten vorgesehen ist. Die drahtlose Kommunikation zwischen zumindest zwei Komponenten/Objekte des Nahrungsmittelzubereitungssystems, beispielsweise zwischen der Prozessleitvorrichtung, dem Zubereitungsgerät und/oder der Informationseinheit, kann drahtlos und/oder drahtgebunden sein. Bei einer drahtlosen Kommunikation können die zumindest zwei Komponenten/Objekte des Nahrungsmittelzubereitungssystems beispielsweise mittels einer UWB-, LAN-, WLAN-, WPAN-, Infrarot-, RFID-, NFC-, ZigBee-, und/oder Bluetooth-Verbindung miteinander kommunizieren, wobei auch noch andere dem Fachmann bekannte und als sinnvoll erscheinende Kommunikationsverbindungen möglich sein können.

Die Kommunikationseinheit kann zumindest ein Prozessleit-Kommunikationselement aufweisen, welches Teil der Prozessleitvorrichtung ist. Das Prozessleit-Kommunikationselement kann mit der Prozessleit-Steuereinheit verbunden und dazu vorgesehen sein, Daten zu Empfangen und zu Senden. Ferner kann die Kommunikationseinheit ein Geräte-Kommunikationselement aufweisen, welches Teil des Zubereitungsgeräts ist. Das Geräte-Kommunikationselement kann mit der Geräte-Steuereinheit verbunden und dazu vorgesehen sein, Daten zu Empfangen und zu Senden. Bevorzugt kommunizieren das Prozessleit-Kommunikationselement und das Geräte-Kommunikationselement drahtlos miteinander. Das Geräte-Kommunikationselement kann Daten, und zwar vorteilhaft zumindest die von dem weiteren Temperatursensorelement sensierte physikalische Grösse, insbesondere die Temperatur des Garmediums an die Prozessleit-Kommunikationselement übertragen. Ferner kann zur Ansteuerung des Zubereitungsgeräts die Prozessleit-Steuereinheit mittels der Prozessleit-Kommunikationselement zumindest den Steuerbefehl an die Geräte-Kommunikationselement und damit mittelbar an die Geräte-Steuereinheit übersenden. Vorteilhaft übermittelt/übersendet das Zubereitungsgerät, insbesondere das Geräte-Kommunikationselement, kontinuierlich, insbesondere periodisch, vorteilhaft zumindest während des Zubereitungsprozesses, der Prozessleitvorrichtung, insbesondere dem Prozessleit-Kommunikationselement, die Temperatur des Garmediums. Bevorzugt übermittelt/übersendet das Prozessleit-Kommunikationselement dem Geräte-Kommunikationselement die Soll-Temperatur für das Garmedium. Basierend auf dem Steuerbefehl, insbesondere der Soll-Temperatur, kann die Geräte-Steuereinheit die Heizeinheit ansteuern und/oder regeln, sodass das Garmedium die Soll-Temperatur erreicht und vorteilhaft die Soll-Temperatur beibehält. Ferner kann mittels des Steuerbefehls ein Beenden und/oder Stoppen der Beheizung des Garmediums der Geräte-Steuereinheit mitgeteilt werden. Zur Kommunikation mit der Prozessleitvorrichtung kann die Informationseinheit zumindest ein Info-Kommunikationselement aufweisen, welches mit zumindest dem Prozessleit-Kommunikationselement kommunizieren kann. Insbesondere ist das Info-Kommunikationselement Teil der Kommunikationseinheit. Nach Berechnung der Zubereitungskenngrösse kann die Prozessleitvorrichtung eine Übermittlung der Zubereitungskenngrösse an die Informationseinheit starten, wobei das Prozessleit-Kommunikationselement Daten bezüglich zumindest der Zubereitungskenngrösse an das Info-Kommunikationselement übermitteln kann.

Zudem wird vorgeschlagen, dass das Nahrungsmittelzubereitungssystem eine Energieversorgungseinheit zur Energieversorgung der tragbaren Informationseinheit aufweist. Dadurch kann ein Komfort und eine Effizienz weiter gesteigert werden. Ferner kann eine Flexibilität erhöht und bevorzugt eine zumindest zeitweise Unabhängigkeit zumindest einer Komponente des Nahrungsmittelzubereitungssystems zu einem Stromnetz bereitgestellt werden. Die Energieversorgungseinheit kann zumindest eine Batterie und/oder zumindest einen Akku aufweisen, welche in der Prozessleitvorrichtung, dem Zubereitungsgerät und/oder der Informationseinheit angeordnet und Teil davon sein kann. Die Energieversorgungseinheit kann zur autarken Energieversorgung der Prozessleitvorrichtung, dem Zubereitungsgerät und/oder der Informationseinheit vorgesehen sein. Alternativ kann/können das Zubereitungsgerät und/oder die Prozessleitvorrichtung zu einer Inbetriebnahme an das Stromnetz angeschlossen werden. Bevorzugt weist die Energieversorgungseinheit eine als Ladestation ausgebildete Ladeeinheit zur drahtlosen Energieübertragung an die Informationseinheit auf. Die Ladeeinheit kann eine Energiesendeeinheit zur drahtlosen Energieübertragung aufweisen. Ferner kann die Informationseinheit eine Energieempfangseinheit der Energieversorgungseinheit aufweisen, welche dazu vorgesehen ist, Energie zumindest zeitweise und/oder temporär zu speichern. Die Energiesendeeinheit kann dazu vorgesehen sein, Energie an die Energieempfangseinheit zu übertragen. Vorteilhaft erfolgt die Energieübertragung zwischen der Ladeeinheit und der Informationseinheit mittels Induktion. Die Energiesendeeinheit kann zumindest eine Induktionsspule aufweisen. Die Ladeeinheit kann mit dem Zubereitungsgerät kabelverbunden und von dem Zubereitungsgerät Strom zum Betrieb beziehen. Alternativ kann die Ladeeinheit auch individuell ans Stromnetz anschliessbar sein oder einen Akku, eine Batterie oder dergleichen aufweisen. Alternativ kann die Ladestation zumindest einen Permanentmagneten aufweisen, wodurch auf eine Anbindung an das Stromnetz oder zusätzliche Energieträger, wie einen Akku oder eine Batterie in der Ladestation verzichtet werden kann. Weist die Ladestation zumindest einen Permanentmagneten auf, so kann auf zumindest die Energiesendeeinheit verzichtet werden und die Ladestation kann als eine dem Fachmann bekannte Home-Station fungieren. Für einen Ladevorgang kann die Informationseinheit auf der Ladestation bezüglich zu der Induktionsspule platziert werden. Zur Steuerung einer Energieübertragung weist die Ladeeinheit vorteilhaft eine Lade-Steuereinheit auf. Insbesondere ist die Lade-Steuereinheit dazu vorgesehen, die Energiesendeeinheit anzusteuern und damit die Energieübertragung/Energieversorgung zu regeln.

Denkbar wäre, dass eine Energieversorgung automatisch startet, sobald die Informationseinheit auf der Ladeeinheit angeordnet ist. Ferner kann eine Energieversorgung automatisch beendet sein, wenn die Informationseinheit von der Ladeeinheit entfernt wird. Vorzugsweise detektiert die Informationseinheit eine Positionierung auf der Ladestation. Die Informationseinheit kann eine Information bezüglich ihrer Positionierung auf der Ladestation an die Prozessleitvorrichtung senden, welche der Ladestation eine Information zur Inbetriebnahme des Ladevorgangs, und zwar zum Start der Energieübertragung übermitteln kann. Die Informationseinheit kann der Prozessleitvorrichtung ein Entfernen von der Ladestation übermitteln. Daraufhin kann die Prozessleitvorrichtung den Ladevorgang stoppen und der Ladestation entsprechend zumindest eine Information zum Beenden der Energieübertragung übermitteln. Vorteilhaft weist die Ladestation mehrere Energiesendeeinheiten auf, und zwar bevorzugt genau so viele wie es Informationseinheiten gibt. Jeder Informationseinheit kann auf bzw. bezüglich zu zumindest einer Energiesendeeinheit der Mehrzahl von Energiesendeeinheiten angeordnet und/oder platziert werden. Bevorzugt betreibt die Lade-Steuereinheit die Energiesendeeinheiten jeweils periodisch gepulst. Die Informationseinheit kann mittels der Energieempfangseinheit die von der Energiesendeeinheit ausgesendeten Pulse empfangen. Insbesondere ist eine Dauer einer Pause zwischen den Pulsen für jede Energiesendeeinheit einmalig, und zwar unterschiedlich. Die Informationseinheit kann aufgrund der gepulten Betreibung der Energiesendeeinheiten die Energiesendeeinheiten jeweils einzeln und unabhängig voneinander erkennen und damit ermitteln, auf welcher Position auf der Ladestation, und zwar bezüglich welcher Energiesendeeinheit der Ladestation die Informationseinheit angeordnet ist. Ferner kann dadurch eine Positionserkennung bereitgestellt werden, sodass die Informationseinheit bei Anordnung auf der Ladestation, und zwar oberhalb bzw. bezüglich zu einer der Energiesendeeinheiten die Position auf der Ladestation erkennen kann und vorteilhaft diese Information der Prozessleitvorrichtung übermitteln kann. Ferner kann die Ladeeinheit zumindest ein Lade-Kommunikationselement zur Kommunikation mit zumindest der Prozessleitvorrichtung, insbesondere dem Prozessleit-Kommunikationselement, aufweisen. Mittels dem Prozessleit-Kommunikationselement kann die Prozessleit-Steuereinheit zumindest eine Information von der Lade-Steuereinheit empfangen und/oder zumindest einen Steuerbefehl an die Lade-Steuereinheit senden. Bevorzugt übermittelt die Prozessleit-Steuereinheit der Lade-Steuereinheit, ob die Informationseinheit auf bzw. bezüglich zu welcher der Energiesendeeinheit angeordnet und/oder positioniert ist und insbesondere betriebsbereit ist.

Ausserdem wird vorgeschlagen, dass die tragbare Informationseinheit zumindest eine Anzeigeeinheit zur Anzeige des aktuellen Werts der Zubereitungskenngrösse aufweist. Damit kann ein besonders benutzerfreundliches und komfortables System bereitgestellt werden. Ferner kann ein Benutzer stets über einen aktuellen Wert einer Zubereitungskenngrösse informiert werden, wobei er dadurch einen Überblick über einen Zubereitungsprozess behalten kann. Die Informationseinheit kann mittels der Anzeigeeinheit zusätzlich zumindest einen aktuellen Wert der weiteren Zubereitungskenngrösse dem Benutzer anzeigen. Insbesondere weist die Anzeigeeinheit zumindest ein Display auf. Das Display könnte ein Display mit beispielsweise zumindest einer Hintergrundbeleuchtung, insbesondere ein LC-Display, sein. Denkbar wäre auch, dass die Anzeigeeinheit zumindest ein Material, welches selbstleuchtend ist, aufweist, beispielsweise ein elektrolumineszentes Material, welches in einem Betriebszustand insbesondere selbst Licht emittiert. Die Anzeigeeinheit kann zumindest ein Anzeigeelement, insbesondere ein Leuchtmittel, aufweisen. Das Anzeigeelement kann, ohne darauf beschränkt zu sein, zumindest beispielsweise eine LED, ein elektronisches Papier (e-paper, ePaper), eine organisch lichtemittierende Diode (OLED), eine Active Matrix Organic Light Emitting Diode (AMOLED), oder dergleichen aufweisen. Alternativ könnte das Anzeigeelement auch Flüssigkeitskristalle aufweisen. Vorteilhaft weist die Informationseinheit eine Info-Steuereinheit auf. Insbesondere ist die Info-Steuereinheit dazu vorgesehen, die Anzeige der von der Prozessleitvorrichtung empfangenen Daten über die Anzeigeeinheit an den Benutzer zu steuern und/oder zu regeln. Vorzugsweise empfängt die Informationseinheit mittels der Info-Kommunikationseinheit zumindest die Zubereitungskenngrösse und gibt anschliessend den aktuellen Wert der Zubereitungskenngrösse mittels der Anzeigeeinheit aus. Ferner kann die Informationseinheit mittels der Info-Kommunikationseinheit zumindest die weitere Zubereitungskenngrösse von der Prozessleitvorrichtung empfangen und anschliessend den aktuellen Wert der weiteren Zubereitungskenngrösse mittels der Anzeigeeinheit ausgeben. Die Info-Steuereinheit kann den aktuellen Wert der Zubereitungskenngrösse und/oder den aktuellen Wert der weiteren Zubereitungskenngrösse berechnen. Vorzugsweise steuert die Info-Steuereinheit ein Herunterzählen der Zubereitungszeit bis zu einem Ablauf der Zubereitungszeit. Die Anzeigeeinheit kann ferner dazu vorgesehen sein, zusätzlich oder alternativ zu dem aktuellen Wert der Zubereitungskenngrösse noch weitere Informationen, beispielsweise Bilder, Symbole, Werte, Icons oder dergleichen, an den Benutzer auszugeben. Bevorzugt gibt die Informationseinheit mittels der Anzeigeeinheit den aktuellen Wert der weiteren Zubereitungskenngrösse, und zwar den aktuellen Härtegrad des Nahrungsmittels anhand von Bildern des Nahrungsmittels dem Benutzer aus.

Um einen Benutzer über einen Zustand eines Zubereitungsprozesses eines Nahrungsmittels, und zwar über ein Erreichen eines Endes des Zubereitungsprozesses zu informieren und damit einen Benutzerkomfort weiter zu steigern, wird vorgeschlagen, dass die tragbare Informationseinheit eine Signaleinheit zur optischen und/oder akustischen und/oder haptischen Ausgabe bei Erreichen eines Ziel-Werts der Zubereitungskenngrösse aufweist. Bei Erreichen des Ziel-Wert der Zubereitungskenngrösse, vorzugsweise bei einem Ablauf der Zubereitungszeit, kann die Signaleinheit den Benutzer optischen und/oder akustischen und/oder haptischen darauf hinweisen und insbesondere den Benutzer darüber informieren, dass der Zubereitungsprozess beendet ist. Vorteilhaft wenn die Zubereitungsdauer gleich Null bzw. die Zubereitungszeit abgelaufen ist, so ist der Zubereitungsprozess zu Ende. Vorzugweise informiert die Signaleinheit den Benutzer darüber, dass sein Ei-Produkt auf seinen gewünschten Härtegrad fertig gegart ist. Die Signaleinheit kann dazu vorgesehen, das Erreichen des Ziel-Werts der Zubereitungskenngrösse, insbesondere den Ablauf der Zubereitungszeit, mit einem Leuchten und/oder Blinken dem Benutzer optisch sichtbar zu machen. Ferner kann die Signaleinheit dazu vorgesehen sein, ein akustisches Signal auszugeben, beispielsweise zu piepsen oder einen Ton in einer bestimmten Frequenz auszugeben. Zusätzlich oder alternativ kann die Signaleinheit dazu vorgesehen sein, ein haptisches Signal auszugeben, beispielsweise zu vibrieren oder zu wackeln. Insbesondere ist die Signaleinheit dazu vorgesehen, die Aufmerksamkeit des Benutzers zu erregen und diesen auf das Erreichen des Ziel-Werts der Zubereitungskenngrösse aufmerksam zu machen. Die Info-Steuereinheit 206 kann die Signaleinheit 32 ansteuern, und zwar aktivieren oder beenden.

Ferner wird vorgeschlagen, dass das Nahrungsmittelzubereitungssystem eine Mehrzahl von tragbaren Informationseinheiten, insbesondere den bereits genannten mehreren tragbaren Informationseinheiten, aufweist, wobei die Prozessleitvorrichtung dazu vorgesehen ist, jeweils einer der tragbaren Informationseinheiten einen Zubereitungsbereich des Zubereitungsgeräts zuzuordnen. Dadurch kann ein Zubereitungsprozess weiter optimiert, effizienter und komfortabler für mehrere Benutzer gestaltet werden. Ausserdem können mehrere Benutzer gleichzeitig oder zeitgleich zumindest ein Nahrungsmittel zubereiten und mittels jeweils einer Informationseinheit über ihren individuellen Zubereitungsprozess informiert werden. Ferner kann das Nahrungsmittelzubereitungssystem insbesondere in der Gastronomie und/oder Hotellerie eingesetzt werden, und zwar bevorzugt genau dann, wenn mehrere Benutzer individuelle Zubereitungsprozesse an ein und demselben Zubereitungsgerät durchführen wollen. Damit kann eine Verwechslungsgefahr verringert bzw. ausgeschlossen werden.

Im Gastrobereich oder in der Hotellerie kann es vorkommen, dass mehrere Benutzer gleichzeitig das Zubereitungsgerät zur Zubereitung eines Nahrungsmittels nutzen. Dafür kann je ein Zubereitungsbereich des Zubereitungsgeräts einem der mehreren Benutzern zugeordnet werden. Bevorzugt ist je eine Halteeinheit der Mehrzahl von Halteeinheiten in genau einem Zubereitungsbereich angeordnet und/oder positionierbar. Die Prozessleitvorrichtung, insbesondere die Prozessleit-Steuereinheit, kann jeweils einer Informationseinheit der mehreren Informationseinheiten einer Halteeinheit der Halteeinheiten zuordnen. Dadurch können die Benutzer unterschiedliche Zubereitungsprozesse, bevorzugt unterschiedliche Härtegrade ihres Ei-Produkts wählen, und individuell mit der jeweiligen Informationseinheit Informationen über ihren speziellen Zubereitungsprozess erhalten.

Bevorzugt können die Informationseinheiten jeweils unterschiedliche Zubereitungskenngrössen ausgeben und aktuelle Werte der Zubereitungskenngrössen anzeigen. Die Halteeinheit kann in dem Zubereitungsbereich zumindest teilweise in das Aufnahmebehältnis einsetzbar/in dem Aufnahmebehältnis anordenbar sein. Bevorzugt ist zumindest der Haltebereich in dem Aufnahmebehältnis, und zwar in dem Zubereitungsbereich angeordnet und/oder positioniert. Weitere Halteeinheiten können in den weiteren Zubereitungsbereichen in das Aufnahmebehältnis einsetzbar sein. Die Halteeinheiten, insbesondere die erste Halteeinheit und zumindest die zweite Halteeinheit, können in dem eingesetzten Zustand nebeneinander oder gegenüber voneinander in Zubereitungsbereichen angeordnet sein.

Zur Positionserkennung der Halteeinheit in/an dem Aufnahmebehältnis kann das Zubereitungsgerät zumindest eine Positionserkennungseinheit aufweisen. Die Positionserkennungseinheit kann zumindest eine Detektionseinheit umfassen, welche dazu vorgesehen sein kann, die Anwesenheit und/oder die Positionierung der Halteeinheit an/in dem Aufnahmebehältnis zu detektieren. Die Detektionseinheit kann in das Aufnahmebehältnis integriert und/oder eingebaut sein. Vorteilhaft ist die Detektionseinheit an dem Aufnahmebehältnis angeordnet. Die Detektionseinheit kann sich zumindest abschnittsweise oder vollständig entlang zumindest einer Aussenseite und/oder Innenseite des Aufnahmebehältnis erstrecken. Vorzugsweise ist die Detektionseinheit als eine RFID-Antenneneinheit ausgebildet. Ferner kann die Positionserkennungseinheit zumindest eine Sendeeinheit aufweisen. Insbesondere ist die Sendeeinheit Teil der Halteeinheit. Alternativ kann die Sendeeinheit auch an der Halteeinheit angeordnet und/oder befestigt sein, beispielsweise mittels einer Kraft-, Form- und/oder Stoffschlussverbindung. Vorteilhaft ist die Sendeeinheit dazu vorgesehen, zumindest ein Signal an die Detektionseinheit zu senden, und zwar drahtlos. Die Sendeeinheit und die Detektionseinheit können drahtlos miteinander kommunizieren. Bevorzugt ist die Sendeeinheit als ein RFID-Tag ausgebildet. Alternativ können die Detektionseinheit und die Sendeeinheit auch, ohne darauf beschränkt zu sein, mittels WLAN-, WPAN-, Infrarot-, NFC-, ZigBee-, und/oder Bluetooth miteinander kommunizieren. Aufgrund individueller Programmierung und ID-Zuweisung der Sendeeinheit und/oder Detektionseinheit kann erkennbar sein, welche Halteeinheit an welcher Position an/in dem Aufnahmebehältnis positioniert und/oder angeordnet ist.

Besonders bevorzugt ist die Informationseinheit dazu vorgesehen, eine Information über die Position und/oder den Ort des garenden oder fertig gegarten Nahrungsmittels auszugeben, und zwar vorteilhaft in welchem Zubereitungsbereich und/oder in welcher Halteeinheit das entsprechende Nahrungsmittel, insbesondere Ei-Produkt, positioniert und/oder angeordnet ist. Vorzugsweise kommuniziert die Detektionseinheit mit der Geräte-Steuereinheit und übermittelt dieser Daten bezüglich einer Detektion der Sendeeinheit. Die Geräte-Steuereinheit kann die Daten und Informationen von der Detektionseinheit mittels des Geräte-Kommunikationselement an die Prozessleitvorrichtung, insbesondere die Prozessleit-Steuereinheit übermitteln. Die Prozessleitvorrichtung kann positionsbezogene Daten der Halteeinheit und/oder Informationen über die Anordnung des Nahrungsmittels in dem Zubereitungsbereich an die Informationseinheit übermitteln. Die Informationseinheit kann die von der Prozessleitvorrichtung empfangenen Daten bzw. die Information über die Position und/oder den Ort des Nahrungsmittels in dem Zubereitungsgerät an den Benutzer auszugeben. Damit kann eine Verwechslungsgefahr bei gleichzeitig stattfinden Zubereitungsprozessen verringert, und vorteilhaft ausgeschlossen werden.

Das Nahrungsmittelzubereitungssystem, die Prozessleitvorrichtung, die tragbare Informationseinheit und/oder die Verwendung des Nahrungsmittelzubereitungssystems soll/sollen hierbei nicht auf die oben beschriebene Anwendung und Ausführungsform beschränkt sein. Insbesondere kann das Nahrungsmittelzubereitungssystem, die Prozessleitvorrichtung und/oder die tragbare Informationseinheit zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Fig. 1: ein Nahrungsmittelzubereitungssystem umfassend ein Zubereitungsgerät, eine Prozessleitvorrichtung und eine Mehrzahl von tragbaren Informationseinheiten,
- Fig. 2: eine Seitenansicht des Nahrungsmittelzubereitungssystems gemäss Figur 1 sowie ein als Eiprodukt ausgebildetes Nahrungsmittel, welches in einer Aufnahmeeinheit der Prozessleitvorrichtung angeordnet ist,
- Fig. 3: eine Nahansicht einer Kopplungseinheit der Prozessleitvorrichtung zur lösbaren Verbindung mit dem Zubereitungsgerät,
- Fig. 4: eine Detailansicht eines Halteeinheit des Zubereitungsgeräts mit dem Nahrungsmittel,
- Fig. 5: eine Detailansicht der tragbaren Informationseinheit,
- Fig. 6: eine Nahansicht der Mehrzahl von tragbaren Informationseinheiten, welche auf einer Energieversorgungseinheit des Nahrungsmittelzubereitungssystems angeordnet sind,
- Fig. 7: Übersichtsschema der Komponenten des Nahrungsmittelzubereitungssystems und
- Fig. 8: ein schematisch dargestelltes Verfahrensdiagramm eines Verfahrens zur Benutzung des Nahrungsmittelzubereitungssystems.

### Beschreibung des Ausführungsbeispiels

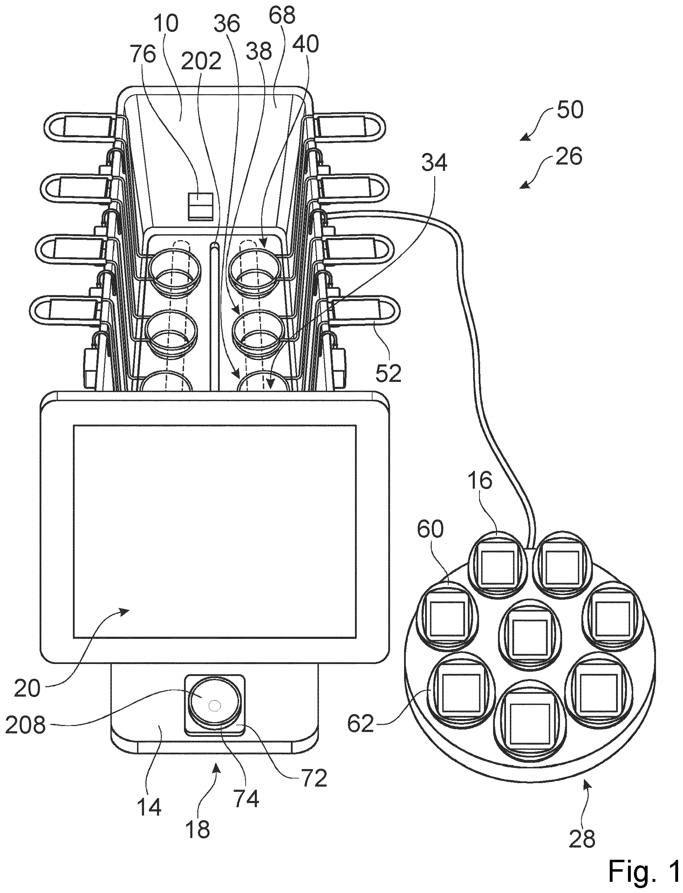

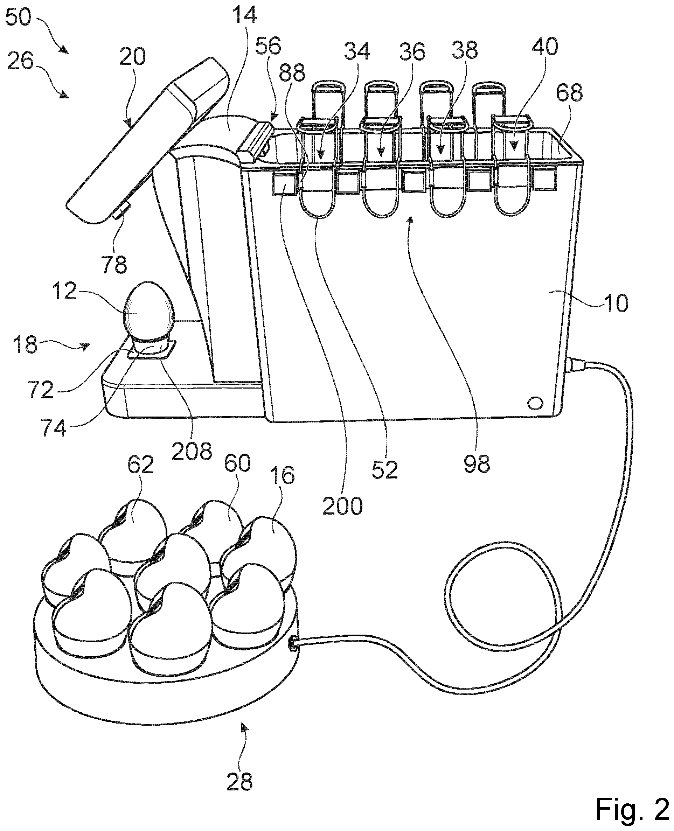

Die Figur 1 zeigt ein Nahrungsmittelzubereitungssystem 50 mit einem Zubereitungsgerät 10. Das Zubereitungsgerät 10 ist zur Zubereitung zumindest eines Nahrungsmittels 12 vorgesehen, wobei in Figur 2 das Nahrungsmittelzubereitungssystem 50 in einer Seitenansicht gemäss Figur 1 mit dem Nahrungsmittel 12 zu sehen ist. In dieser beispielhaften Ausgestaltung ist das Nahrungsmittelsystem 50 als ein Nahrungsmittelgarsystem und das Zubereitungsgerät 10 als ein Gargerät ausgebildet. Das Zubereitungsgerät 10 könnte ein Kochfeld, ein Backofen, eine Mikrowelle, ein Dampfgarer, ein Toaster oder dergleichen sein. Vorliegend ist das Zubereitungsgerät 10 als ein Eierkocher zur Zubereitung von Ei-Produkten ausgebildet. Bei dem Nahrungsmittel 12 handelt es sich dementsprechend in dieser beispielhaften Ausgestaltung um ein Ei-Produkt, und zwar um ein tierisches Ei. Alternativ kann das Ei-Produkt auch auf pflanzlicher und/oder industriell hergestellter Basis bestehen. Ferner ist die Verwendung des Nahrungsmittelzubereitungssystems 50 zur Zubereitung von Ei-Produkten in der Gastronomie vorgesehen.

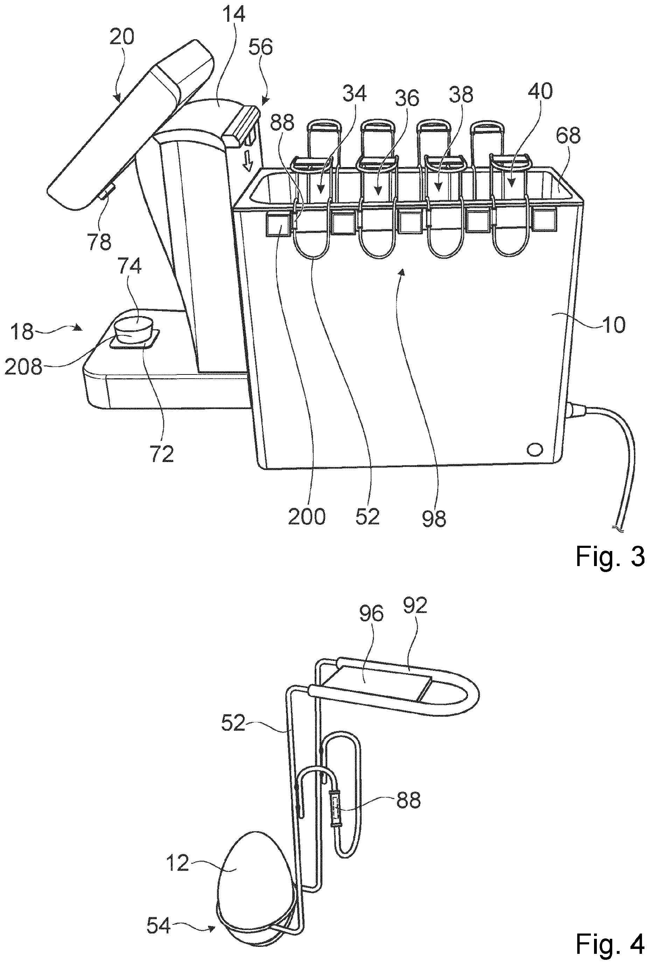

Das Zubereitungsgerät 10 weist zumindest eine Halteeinheit 52 zur Halterung des Nahrungsmittels 12 auf. Figur 4 zeigt eine Detailansicht der Halteeinheit 52 in einem das Nahrungsmittel 12 haltenden Zustand. Vorliegend ist das als Ei-Produkt ausgebildete Nahrungsmittel 12 in der Halteeinheit 52 positioniert. Die Halteeinheit 52 ist dazu vorgesehen, dass Nahrungsmittel 12 zumindest teilweise oder zumindest zu einem Grossteil aufzunehmen, zu halten und/oder zu tragen. Die Halteeinheit 52 weist zumindest einen Haltebereich 54 zur Halterung des Nahrungsmittels 12 auf. In dieser beispielhaften Ausgestaltung nimmt die Halteeinheit 52 das Nahrungsmittel 12 in dem Haltebereich 54 zumindest zu 20 % und höchstens zu 30 % auf. Ferner kann die Halteeinheit 52 eine Fixiereinheit aufweisen, welche dazu vorgesehen ist, das Nahrungsmittel 12 in dem Haltebereich 54 zu fixieren und beispielsweise vor einem herausfallen, umkippen, raustreiben oder dergleichen zu schützen (nicht dargestellt).

Die Halteeinheit 52 weist zumindest ein Griffelement 92 auf (vgl. Figur 4). Das Griffelement 92 ist zur Halterung und/oder Betätigung durch einen Benutzer vorgesehen. An dem Griffelement 92 kann der Benutzer die Halteeinheit 52 halten und/oder greifen. Der Benutzer hält die Halteeinheit 52 an dem Griffelement 92, um diese zu bewegen und um beispielsweise das Nahrungsmittel 12 in dem Haltebereich 54 zu platzieren und/oder anzuordnen. Das Zubereitungsgerät 10 weist vorliegend eine Mehrzahl von Halteeinheiten 52 auf. Die Figuren 1 bis 3 zeigen, dass das Zubereitungsgerät 10 in dieser beispielhaften Ausgestaltung zumindest acht Halteeinheiten aufweist, wobei der Übersichtlichkeit halber lediglich eine Halteeinheit 52 mit einem Bezugszeichen versehen ist. Vorliegend sind alle Halteeinheiten 52 des Zubereitungsgeräts 10 zumindest im Wesentlichen konstruktionell identisch zueinander ausgebildet, und zwar unabhängig von Fertigungstoleranzen, sodass die Ausführungen bezüglich der Halteeinheit 52 auf alle weiteren Halteeinheiten des Zubereitungsgeräts 10 übertragbar sind. Zur Unterscheidung der Mehrzahl von Halteeinheiten 52 untereinander, weist jede Halteeinheit 52 zumindest ein Kennzeichnungselement 96 (vgl. Figur 4).

Vorliegend weist das Griffelement 92 das Kennzeichnungselement 96 auf. Das Kennzeichnungselement 96 ist dazu vorgesehen, die Halteeinheit 52 für den Benutzer zu identifizieren und/oder zu kennzeichnen. In dieser beispielhaften Ausgestaltung weist das Kennzeichnungselement 96 zumindest eine farbige und strukturierte Sichtoberfläche auf. Es ist vorgesehen, dass jede Halteeinheit 52 der Mehrzahl von Halteeinheiten 52 unterschiedlich farbige und strukturierte Sichtoberflächen aufweist. Ferner ist auch möglich, dass das Kennzeichnungselement 96 zumindest eine Anzeigeeinheit, beispielsweise ein Display oder eine Leuchteinheit, wie eine LED, zur Anzeige zumindest einer Information aufweist (nicht gezeigt). Das Kennzeichnungselement 96 kann auch als eine Nummer, ein Zeichen und/oder ein Symbol ausgebildet sein, welche auf dem Griffelement 92 angeordnet ist, um die Halteeinheit 52 zu kennzeichnen.

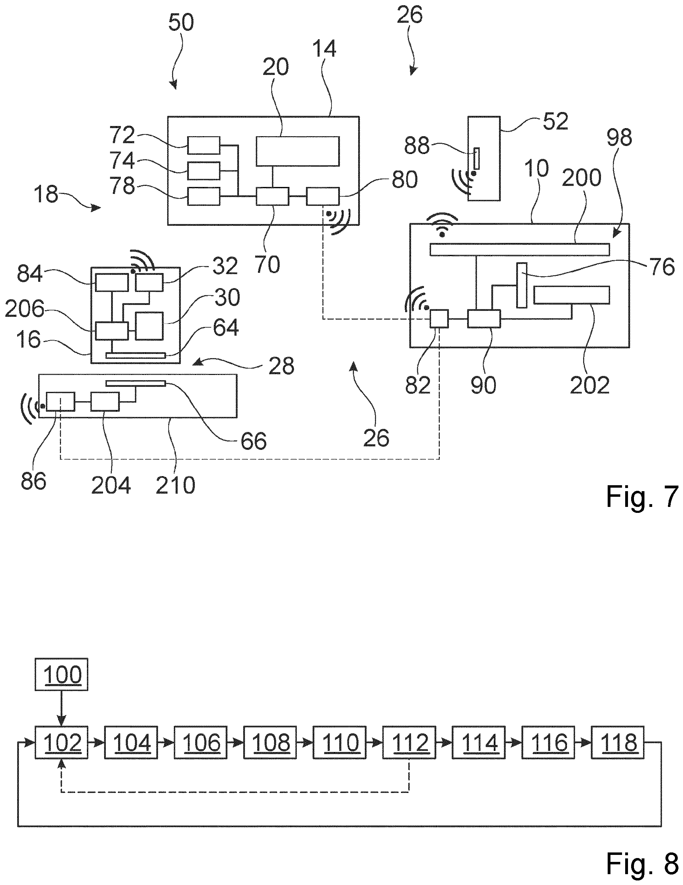

Das Zubereitungsgerät 10 weist zumindest einen Zubereitungsbereich 34 zur Zubereitung des Nahrungsmittels 12 auf. Vorliegend weist das Zubereitungsgerät 10 zumindest acht Zubereitungsbereiche auf, wobei der Übersichtlichkeit halber lediglich vier Zubereitungsbereiche 34, 36, 38, 40 beispielhaft mit einem Bezugszeichen versehen sind. Das Zubereitungsgerät 10 weist in dieser Ausgestaltung genauso viele Zubereitungsbereiche 34, 36, 38, 40 auf, wie es Halteeinheiten 52 aufweist (vgl. Figuren 1 bis 3). Das Zubereitungsgerät 10 weist zumindest ein Aufnahmebehältnis 68 auf. Der Aufnahmebehälter 68 ist dazu vorgesehen, zumindest ein Garmedium und/oder zumindest das Nahrungsmittel 12 aufzunehmen. Da das Zubereitungsgerät 10 in dieser Ausgestaltung als Eierkocher ausgebildet ist, ist das Aufnahmebehältnis 68 dazu vorgesehen, zumindest teilweise oder zumindest zu einem Grossteil Wasser als Garmedium aufzunehmen, um das Nahrungsmittel 12 zuzubereiten. Ferner weist das zubereitungsgerät 10 zumindest eine Heizeinheit 202 auf. Die Heizeinheit 202 ist vorliegend dazu vorgesehen, dass Garmedium, und zwar das Wasser zu erhitzen, um damit das Nahrungsmittel 12 zu garen. Die Heizeinheit 202 umfasst in dieser beispielhaften Ausgestaltung zumindest einen Heizstab, und zwar zumindest ein Widerstandsheizelement. Alternativ kann die Heizeinheit 202 auch zumindest ein induktives Heizelement, wie beispielsweise eine Spule aufweisen. Zur Steuerung zumindest der Heizeinheit 202 weist das Zubereitungsgerät 10 eine Geräte-Steuereinheit 90 auf (vgl. Figur 7). Die Geräte-Steuereinheit 90 ist dazu vorgesehen, zumindest eine Betriebsfunktion des Zubereitungsgeräts 10 zu steuern und/oder zu regeln. Vorliegend steuert und/oder regelt die Geräte-Steuereinheit 90 zumindest einen Heizvorgang, und damit zumindest die Heizeinheit 202.

Während die Figuren 1 und 2 Aussenansichten des Nahrungsmittelsystems 50 zeigen, ist zum besseren Verständnis in Figur 7 eine vereinfachte, schematische Darstellung der verschiedenen Komponenten des Nahrungsmittelzubereitungssystems 50 sowie deren Verbindungen untereinander gezeigt.

Das Aufnahmebehältnis 68 umfasst die Zubereitungsbereiche 34, 36, 38, 40 und begrenzt diese zumindest teilweise. Ferner ist das Aufnahmebehältnis 68 dazu vorgesehen, die Halteeinheit 52 zumindest teilweise aufzunehmen. Die Halteeinheit 52 ist zumindest teilweise in dem Aufnahmebehältnis 68 anordenbar. Die Halteeinheit 52 ist in das Aufnahmebehältnis 68 einsetzbar. Figuren 1 bis 3 zeigen einen eingesetzten Zustand der Halteeinheit 52 in dem Aufnahmebehältnis 68. Die Halteeinheit 52 ist in dem Zubereitungsbereich 34 zumindest teilweise in das Aufnahmebehältnis 68 eingesetzt/in dem Aufnahmebehältnis 68 angeordnet. Weitere Halteeinheiten 52 sind zumindest in den Zubereitungsbereichen 36, 38, 40 in das Aufnahmebehältnis eingesetzt/in dem Aufnahmebehältnis 68 angeordnet (vgl. Figuren 1 bis 3). Es ist ersichtlich, dass die Zubereitungsbereiche 34, 36, 38, 40 nebeneinander angeordnet sind. In dem eingesetzten Zustand ist die Halteeinheit 52 zumindest teilweise innerhalb des Aufnahmebehältnis 68 angeordnet. Vorliegend ist zumindest der Haltebereich 54 in dem Aufnahmebehältnis 68, und zwar in dem Zubereitungsbereich 34 angeordnet und/oder positioniert.

Zur Positionserkennung der Halteeinheit 52 in/an dem Aufnahmebehältnis 68 weist das Zubereitungsgerät 10 eine Positionserkennungseinheit 98 auf. Die Positionserkennungseinheit 98 weist zumindest eine Detektionseinheit 200 auf, welche dazu vorgesehen ist, die Anwesenheit und/oder die Positionierung der Halteeinheit 52 an/in dem Aufnahmebehältnis 68 zu detektieren. Die Detektionseinheit 200 ist vorliegend an dem Aufnahmebehältnis 68 angeordnet. Die Detektionseinheit 200 erstreckt sich zumindest abschnittsweise entlang einer Aussenseite des Aufnahmebehältnis 68. In dieser beispielhaften Ausgestaltung ist die Detektionseinheit 200 als eine RFID-Antenneneinheit ausgebildet. Die Positionserkennungseinheit 98 weist zumindest eine Sendeeinheit 88 auf. Vorliegend ist die Sendeeinheit 88 Teil der Halteeinheit 52. Die Sendeeinheit 88 kann auch an der Halteeinheit 52 angeordnet und/oder befestigt sein, beispielsweise mittels einer Kraft-, Form- und/oder Stoffschlussverbindung. Die Sendeeinheit 88 ist dazu vorgesehen, zumindest ein Signal an die Detektionseinheit 200 zu senden, und zwar drahtlos. Die Sendeeinheit 88 und die Detektionseinheit 200 sind zu einer drahtlosen Kommunikation miteinander vorgesehen. In dieser beispielhaften Ausgestaltung ist die Sendeeinheit 88 als ein RFID-Tag ausgebildet. Aufgrund individueller Programmierung und ID-Zuweisung ist erkennbar, welche Halteeinheit 52 an welcher Position an/in dem Aufnahmebehältnis 68 positioniert und/oder angeordnet ist.

Um eine besonders komfortable, effiziente und benutzerfreundliche Zubereitung von Nahrungsmitteln 12 bereitzustellen, umfasst das Nahrungsmittelzubereitungssystem 50 eine Prozessleitvorrichtung 14. Die Prozessleitvorrichtung 14 leitet, steuert und/oder regelt einen Zubereitungsprozess zur Zubereitung des Nahrungsmittels 12. Gemäss Figuren 2 und 3 ist ersichtlich, dass die Prozessleitvorrichtung 14 mit dem Zubereitungsgerät 10 mechanisch verbindbar ist, wobei Figur 2 einen verbunden Zustand des Zubereitungsgeräts 10 mit der Prozessleitvorrichtung 14 zeigt. Vorliegend weist die Prozessleitvorrichtung 14 eine Kopplungseinheit 56 zur lösbaren Verbindung mit dem Zubereitungsgerät 10 auf. Die Kopplungseinheit 56 weist zumindest ein Formschlusselement zur lösbaren Fixierung an dem Zubereitungsgerät 10 auf. In dieser beispielhaften Ausgestaltung ist die Prozessleitvorrichtung 14 an/auf das Zubereitungsgerät 10 steckbar.

Die Prozessleitvorrichtung 14 ist dazu vorgesehen, eine Parametersatz, welcher zumindest einen Parameter des Nahrungsmittels 12 und zumindest einen Parameter des Zubereitungsgeräts 10 umfasst, zu erfassen und diesen zur Berechnung zumindest einer Zubereitungskenngrösse heranzuziehen. Die Prozessleitvorrichtung 14 weist eine Prozessleit-Steuereinheit 70 auf (vgl. Figur 7). Die Prozessleit-Steuereinheit 70 ist dazu vorgesehen, den Parametersatz zu erfassen, zu ermitteln und/oder zu bestimmen. Die Prozessleit-Steuereinheit 70 ist dazu vorgesehen, die Berechnung zumindest der Zubereitungskenngrösse durchzuführen. Der Parameter des Nahrungsmittels 12 ist vorliegend ein Gewichtsparameter, welcher sich auf das Ist-Gewicht des Nahrungsmittels 12 bezieht. Denkbar wäre auch, dass der Parameter des Nahrungsmittels 12 ein Temperaturparameter, ein Grössenparameter, ein Ausrichtungsparameter, ein Frischeparameter, ein Festigkeitsparameter, ein Zubereitungsparameter oder ein Zusammensetzungsparameter des Nahrungsmittels 12 ist. In dieser beispielhaften Ausgestaltung umfasst der Parametersatz neben dem genannten Parameter des Nahrungsmittels 12 zumindest einen zusätzlichen Parameter, und zwar einen Parameter einer Umgebung der Prozessleitvorrichtung 14. Vorliegend ist der Parameter der Umgebung der Prozessleitvorrichtung ein Temperaturparameter, welcher sich auf die Ist-Temperatur der Umgebung bezieht. Daraus kann die Prozessleit-Steuereinheit 70 eine Ist-Temperatur des Nahrungsmittels 12 näherungsweise ermitteln.

Ferner ist der Parameter des Zubereitungsgeräts 10 in dem vorliegenden Fall ein Temperaturparameter, welcher eine Gartemperatur angibt. Dieser Temperaturparameter gibt eine Temperatur des Garmediums, und zwar in diesem Fall des Wassers an, welches sich in dem Zubereitungsgerät 10 befindet, an. Alternativ kann es sich bei dem Parameter des Zubereitungsgeräts 10 auch um einen Heizleistungsparameter, einen Grössenparameter, einen Gewichtsparameter, einen Ausrichtungsparameter, einen Betriebsparameter oder Funktionsparameter handeln. In dieser beispielhaften Ausgestaltung umfasst der Parametersatz genau einen Parameter des Zubereitungsgeräts 10, kann aber zusätzlich zu dem genannten Parameter des Zubereitungsgeräts 10 zumindest einen weiteren Parameter des Zubereitungsgeräts 10 umfassen, beispielsweise den Gewichtsparameter, welcher sich auf ein Ist-Gewicht des Garmediums in dem Zubereitungsgerät 10 bezieht.

Vorliegend die Prozessleit-Steuereinheit 70 dazu vorgesehen, zumindest einen Parameter des Parametersatzes, und zwar den Parameter des Nahrungsmittels 12 und/oder den Parameter des Zubereitungsgeräts 10 und/oder den Parameter der Umgebung, basierend auf einer erfassten und/oder gemessenen Grösse des Nahrungsmittels 12 und/oder des Zubereitungsgeräts 10 und/oder der Umgebung zu ermitteln und/oder zu bestimmen. Zur Ermittlung zumindest eines Parameters des Parametersatzes weist das Nahrungsmittelzubereitungssystem 50 zumindest eine Sensoreinheit 18 auf, welche dazu vorgesehen ist, zumindest eine physikalische Grösse und/oder eine physikalische Eigenschaft zu messen. Die Sensoreinheit 18 weist zumindest ein Sensorelement auf, welches Teil der Prozessleitvorrichtung 14 ist. Das Sensorelement des Prozessleitvorrichtung 14 ist in diesem Fall als ein Gewichtssensorelement 72 ausgebildet. Das Gewichtssensorelement 72 ist dazu vorgesehen, ein Gewicht des Nahrungsmittels 12 zu sensieren und/oder zu erfassen. Vorliegend weist die Prozessleitvorrichtung 14 zumindest eine Aufnahmeeinheit 208 zur zumindest teilweisen Aufnahme des Nahrungsmittels 12 auf. Das Nahrungsmittel 12 ist in die Aufnahmeeinheit 208 einsetzbar, um von zumindest einem Sensorelement der Sensoreinheit 18 sensiert zu werden. Vorliegend ist zumindest das Gewichtssensorelement 72 in der Aufnahmeeinheit 208 eingebaut, sodass bei Positionierung des Nahrungsmittels 12 in und/oder auf der Aufnahmeeinheit 208, das Gewicht des Nahrungsmittels 12 sensierbar und/oder erfassbar ist. Figur 2 zeigt das Nahrungsmittel 12 eingesetzt in die Aufnahmeeinheit 208.

In dieser beispielhaften Ausgestaltung weist die Sensoreinheit 18 noch weitere Sensorelemente auf. Vorliegend weist die Sensoreinheit 18 zumindest ein Temperatursensorelement 74 auf. Das Temperatursensorelement 74 ist Teil der Prozessleitvorrichtung 14 und dazu vorgesehen, zumindest eine Temperatur der Umgebung zu erfassen und/oder zu sensieren. Der Temperatursensor 74 ist vorliegend Teil der Aufnahmeeinheit 208, sodass bei Positionierung des Nahrungsmittels 12 in und/oder auf der Aufnahmeeinheit 208, die Temperatur der Umgebung sensierbar und/oder erfassbar ist. Alternativ oder zusätzlich ist auch eine Temperatur des Nahrungsmittels 12 in der Aufnahmeeinheit 208 sensierbar. Ferner weist die Prozessleitvorrichtung 14 zumindest ein optisches Sensorelement 78 der Sensoreinheit 18 zur optischen Sensierung und/oder Erfassung des Nahrungsmittels 12 auf. Vorliegend ist das optische Sensorelement 78 als eine Kamera ausgebildet, wobei es sich jedoch auch um jedes andere geeignete optische Sensorelement handeln kann. Das optische Sensorelement 78 ist dazu vorgesehen, zumindest eine Position und/oder Lage und/oder Ausgestaltung und/oder Grösse und/oder Form des Nahrungsmittels 12 zu erfassen. In dieser vorliegenden Ausgestaltung erfasst und/oder sensiert das optische Sensorelement 78 zumindest die Position und/oder Lage und/oder Ausgestaltung und/oder Grösse und/oder Form des Nahrungsmittels 12, wenn dieses in und/oder auf der Aufnahmeeinheit 208 positioniert ist. Zusätzlich kann die Prozessleitvorrichtung 14 noch weitere Sensorelemente der Sensoreinheit 14 zur Sensierung zumindest einer physikalischen Grösse und/oder einer physikalischen Eigenschaft des Nahrungsmittels 12 und/oder der Umgebung aufweisen, welche vorliegend nicht im Detail ausgeführt sind. Ferner weist die Sensoreinheit 18 zumindest ein weiteres Temperatursensorelement 76 auf. Das weitere Temperatursensorelement 76 ist Teil des Zubereitungsgeräts 10. Das weitere Temperatursensorelement 76 ist dazu vorgesehen, zumindest eine Temperatur des Garmediums, vorliegend des Wassers in dem Zubereitungsgerät 10, und zwar in dem Aufnahmebehältnis 68 zu sensieren und/oder zu erfassen. Zusätzlich kann das Zubereitungsgerät 10 noch weitere Sensorelemente der Sensoreinheit 14 zur Sensierung zumindest einer physikalischen Grösse und/oder einer physikalischen Eigenschaft zumindest des Garmediums aufweisen, welche vorliegend auch nicht im Detail ausgeführt sind.

Wie bereits erläutert, ist die Prozessleit-Steuereinheit 70 dazu vorgesehen, zumindest einen Parameter des Parametersatzes, und zwar vorliegend zumindest den Parameter des Nahrungsmittels 12 und zumindest den Parameter des Zubereitungsgeräts 10, basierend auf einer erfassten und/oder gemessenen Grösse des Nahrungsmittels 12 und des Zubereitungsgeräts 10 zu ermitteln und/oder zu bestimmen. Die Prozessleit-Steuereinheit 70 ermittelt aus der von dem Gewichtssensorelement 72 sensierten physikalischen Grösse des Nahrungsmittels 12, und zwar vorliegend dem Gewicht des Nahrungsmittels 72 den bereits erwähnten Gewichtsparameter. Fener ist die Prozessleit-Steuereinheit 70 dazu vorgesehen, aus der von dem Temperatursensorelement 74 sensierten physikalischen Grösse der Umgebung, und zwar der Temperatur der Umgebung, den bereits erläuterten Temperaturparameter der Umgebung zu ermitteln. Mittels der sensierten physikalischen Grösse des Nahrungsmittels 12, und zwar der Position und/oder Lage und/oder Ausgestaltung und/oder Grösse und/oder Form des Nahrungsmittels 12 durch das optische Sensorelement 78 ist die Prozessleit-Steuereinheit 70 dazu vorgesehen, zumindest einen weiteren Parameter des Nahrungsmittels 12 zu ermitteln. Darauf wird vorliegend jedoch nicht weiter eingegangen.

Zur Ermittlung des Parameters des Zubereitungsgeräts 10 durch die Prozessleit-Steuereinheit 70, kommuniziert diese mit dem Zubereitungsgerät 10. Vorliegend kommuniziert die Prozessleit-Steuereinheit 70 mit der Geräte-Steuereinheit 90. Hierbei weist das Nahrungsmittelzubereitungsgerät 50 eine Kommunikationseinheit 26 zur drahtlosen und/oder drahtgebundenen Kommunikation zwischen zumindest zwei Komponenten des Nahrungsmittelsystems 50 auf. Die Kommunikationseinheit 26 umfasst zumindest ein Prozessleit-Kommunikationselement 80, welches Teil der Prozessleitvorrichtung 14 ist. Das Prozessleit-Kommunikationselement 80 ist mit der Prozessleit-Steuereinheit 70 verbunden und dazu vorgesehen, Informationen und/oder Daten drahtlos und/oder drahtgebunden zu Empfangen und zu Senden. Ferner umfasst die Kommunikationseinheit ein Geräte-Kommunikationselement 82, welches Teil des Zubereitungsgeräts 10 ist. Das Geräte-Kommunikationselement 82 ist mit der Geräte-Steuereinheit 90 verbunden und dazu vorgesehen, Informationen und/oder Daten drahtlos und/oder drahtgebunden zu Empfangen und zu Senden. Vorliegend kommunizieren das Prozessleit-Kommunikationselement 80 und das Geräte-Kommunikationselement 82 drahtgebunden miteinander. Eine drahtlose Kommunikation ist ebenfalls möglich. Das Geräte-Kommunikationselement 82 überträgt Daten, und zwar zumindest die von dem weiteren Temperatursensorelement 76 sensierte physikalische Grösse, vorliegend die Temperatur des Garmediums, und zwar des Wassers, an die Prozessleit-Kommunikationselement 80. Anschliessend ermittelt die Prozessleit-Steuereinheit 70 den Parameter des Zubereitungsgeräts 10, und zwar den bereits erläuterten Temperaturparameter aus des Zubereitungsgeräts 10, basierend auf der von dem weiteren Temperatursensorelement 76 sensierte physikalischen Grösse.

Ferner ist die Prozessleitvorrichtung 14 dazu vorgesehen, das Zubereitungsgerät 10 basierend auf zumindest einem Parameter des Parametersatzes anzusteuern. Zur Ansteuerung des Zubereitungsgeräts 10 übersendet die Prozessleit-Steuereinheit 70 mittels der Prozessleit-Kommunikationselement 80 zumindest einen Steuerbefehl an die Geräte-Kommunikationselement 82 und damit mittelbar an die Geräte-Steuereinheit 90. Basierend auf der Ermittlung der Temperatur des Garmediums durch den weiteren Temperatursensor 76, ferner dem Temperaturparameter des Zubereitungsgeräts 10, steuert und/oder regelt die Prozessleitvorrichtung 14 vorliegend eine Beheizung des Garmediums in dem Zubereitungsgerät 10, ferner einen Heizvorgang des Zubereitungsgeräts 10. Ist die Temperatur des Garmediums, und zwar des Wassers, beispielsweise zu niedrig, steuert und/oder regelt die Prozessleitvorrichtung 14 ein Aufheizen des Garmediums bis zu einer bestimmten Temperatur. Vorliegend beträgt die Temperatur des Garmediums während dem Zubereitungsprozess des Nahrungsmittels 12 zumindest 90° Celsius. Falls die Temperatur des Garmediums zu hoch ist, kann die Prozessleitvorrichtung 14, den Heizvorgang zumindest zeitweise unterbrechen und/oder beenden. Optimale Temperaturwerte des Garmediums für den Zubereitungsprozess des Nahrungsmittels 12 sind in diesem Fall in der Prozessleit-Steuereinheit 70 gespeichert und/oder hinterlegt.

Nach Ermittlung der jeweiligen Parameter des Parametersatzes ist die Prozessleit-Steuereinheit 70 dazu vorgesehen, die Berechnung zumindest der Zubereitungskenngrösse durchzuführen. In dieser speziellen Ausgestaltung ist die Zubereitungskenngrösse ein Zubereitungsdauer. Alternativ kann es sich bei Zubereitungskenngrösse auch um eine Zubereitungstemperatur, eine Zubereitungsgarstufe, eine Zubereitungssituation des Nahrungsmittels 12, ein Zubereitungsgewicht, ein Zubereitungsbereich, eine Zubereitungsposition oder dergleichen handeln. Vorliegend gibt die Zubereitungskenngrösse jedoch die Dauer des Zubereitungsprozesses zur Zubereitung des Nahrungsmittels 12 an. Die Prozessleitvorrichtung 14 ist somit dazu vorgesehen, basierend auf zumindest einem individuellen Parameter des Nahrungsmittels 12, und des Zubereitungsgeräts 10 die Zubereitungsdauer zu berechnen. Zusätzlich berechnet die Prozessleitvorrichtung 14 die Zubereitungskenngrösse vorliegend basierend auf dem Parameter der Umgebung. Ferner berechnet die Prozessleitvorrichtung 14 in dieser beispielhaften Ausgestaltung basierend auf dem Parametersatz zumindest eine weitere Zubereitungskenngrösse, welche vorliegend eine Zubereitungssituation des Nahrungsmittels 12, und zwar ein Härtegrad des Nahrungsmittels 12 ist. Um den Zubereitungsprozess weiter zu optimieren und für den Benutzer noch individueller zu gestalten, weist der Parametersatz zumindest einen benutzerdefinierbaren Parameter auf. Bei dem benutzerdefinierbaren Parameter handelt es sich um einen Parameter, welcher individuell auf den Benutzer definiert oder abgestimmt ist. Denkbar wäre, dass der benutzerdefinierbare Parameter in der Prozessleit-Steuereinheit 70 gespeichert und einem bestimmten Benutzer zugeordnet ist. Vorliegend weist die Prozessleitvorrichtung 14 zumindest eine Benutzerschnittstelle 20 auf. Die Benutzerschnittstelle 20 ist zur optischen und/oder akustischen und/oder haptischen Kommunikation mit dem Benutzer vorgesehen. In dieser beispielhaften Ausgestaltung umfasst die Benutzerschnittstelle 20 einen Touch-Display. Die Prozessleit-Steuereinheit 70 ist dazu vorgesehen, eine Ausgabe von Informationen an den Benutzer über die Benutzerschnittstelle 20 zu steuern und/oder zu regeln. Ferner ist die Prozessleit-Steuereinheit 70 ist dazu vorgesehen, eine Eingabe von Informationen von dem Benutzer über die Benutzerschnittstelle 20 zu empfangen und zu verarbeiten.

Vorliegend ist die Benutzerschnittstelle 20 zur Eingabe des benutzerdefinierbaren Parameters vorgesehen. Bei dem benutzerdefinierbaren Parameter handelt es sich beispielsweise um eine Zubereitungsart des Nahrungsmittels 12, eine Garstufe des Nahrungsmittels 12 oder dergleichen. In dieser beispielhaften Ausgestaltung ist der benutzerdefinierbare Parameter ein Härtegrad des Ei-Produkts. Mittels der Benutzerschnittstelle 20 definiert der Benutzer den Härtegrad des Ei-Produkts und damit wie hart das Ei-Produkt in dem Zubereitungsprozess gegart werden soll. Die Benutzerschnittstelle 20 schlägt dem Benutzer vorliegend eine Auswahl an mehreren unterschiedlichen Härtegraden des Ei-Produkts vor, aus denen der Benutzer auswählen kann, wie hart das Ei-Produkt gegart werden soll, also beispielsweise weich, mittel-hart oder hart. In Abhängigkeit von der Eingabe des Benutzers ermittelt die Prozessleit-Steuereinheit 70 den benutzerdefinierbaren Parameter. Die Prozessleit-Steuereinheit 70 berücksichtigt den benutzerdefinierbaren Parameter bei Berechnung zumindest der Zubereitungskenngrösse, und zwar vorliegend der Zubereitungsdauer. Je härter das Ei-Produkt gegart werden soll, desto länger ist der Zubereitungsprozess und höher die Zubereitungsdauer.

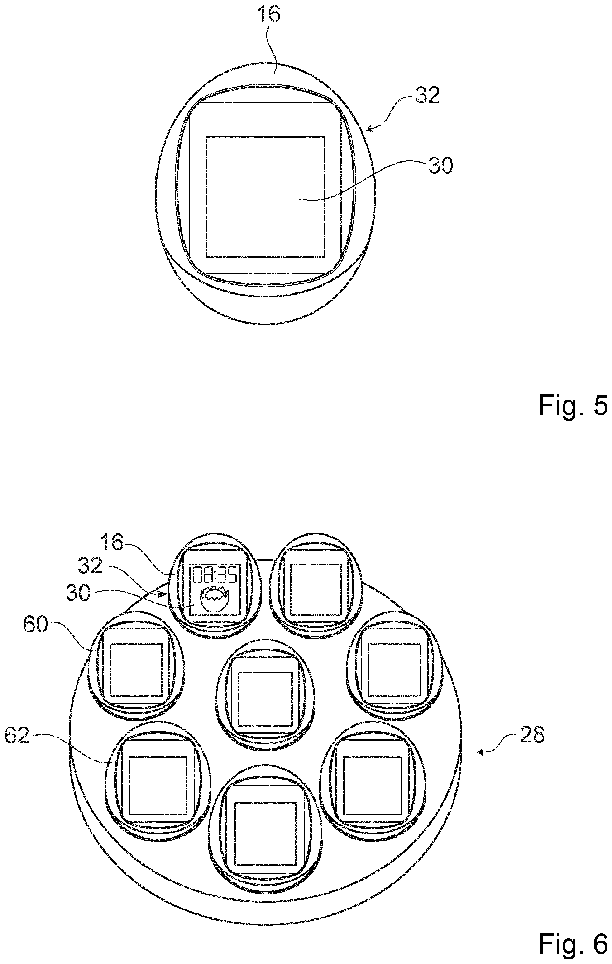

Damit der Benutzer einen Überblick über den Zubereitungsprozess und vor allem vorliegend zumindest die Zubereitungsdauer erhält, weist das Nahrungsmittelzubereitungssystem 50 zumindest eine tragbare Informationseinheit 16 auf. Die tragbare Informationseinheit 16 ist dazu vorgesehen, zumindest die Zubereitungskenngrösse von der Prozessleitvorrichtung 14 zu empfangen und während eines Zubereitungsprozesses des Nahrungsmittels 12 durch das Zubereitungsgerät 10 einen aktuellen Wert der Zubereitungskenngrösse auszugeben. Vorliegend gibt die Informationseinheit 16 zusätzlich einen aktuellen Wert der weiteren Zubereitungskenngrösse aus. Die Informationseinheit 16 gibt den aktuellen Wert der weiteren Zubereitungskenngrösse, und zwar den aktuellen Wert der Zubereitungssituation des Nahrungsmittels 12, vorliegend den aktuellen Wert des Härtegrads des Nahrungsmittels 12, aus. In den Figuren 1, 2, 5, 6 und 7 ist die tragbare Informationseinheit 16 dargestellt, wobei in Figur 5 die Informationseinheit 16 in einer Detailansicht zu sehen ist. Die Informationseinheit 16 weist in dieser beispielhaften Ausgestaltung die Form eines Eies auf. Vorliegend umfasst das Nahrungsmittelzubereitungssystem 50 mehrere tragbare Informationseinheiten 16, und zwar in diesem Beispiel acht Stück, wobei lediglich zu Unterscheidungszwecken drei dieser Informationseinheiten 16, 60, 62 mit einem Bezugszeichen versehen sind. Die Informationseinheiten 16, 60, 62 sind unabhängig von Fertigungstoleranzen zueinander identisch ausgebildet, sodass die Beschreibungen zu der Informationseinheit 16 auch auf die anderen Informationseinheiten übertragbar sind.

Die Informationseinheit 16 weist zumindest eine Anzeigeeinheit 30 zur Anzeige des aktuellen Werts der Zubereitungskenngrösse auf. Die Anzeigeeinheit 30 umfasst vorliegend ein Display. Mittels der Anzeigeneinheit 30 sind noch weitere Informationen zusätzlich zu dem aktuellen Wert der Zubereitungskenngrösse, vorliegend der Zubereitungsdauer dem Benutzer anzeigbar. Die Anzeigeeinheit 30 gibt zumindest den aktuellen Wert der weiteren Zubereitungskenngrösse aus. Die Prozessleitvorrichtung 14 ist dazu vorgesehen, die Anzeige von Informationen durch die Anzeigeeinheit 30 zu steuern und/oder zu regeln, und zwar zumindest eine Information bezüglich der Zubereitungskenngrösse, der weiteren Zubereitungskenngrösse und/oder des Nahrungsmittels 12 an die Informationseinheit zu übertragen. Zur Kommunikation mit der Prozessleitvorrichtung 14 weist die Informationseinheit 16 zumindest ein Info-Kommunikationselement 84 auf. Das Info-Kommunikationselement 84 ist Teil der Kommunikationseinheit 26. Das Info-Kommunikationselement 84 kommuniziert drahtlos mit dem Prozessleit-Kommunikationselement 80. Nach Berechnung der Zubereitungskenngrösse steuert die Prozessleitvorrichtung 14 eine Übermittlung dieser Information an die Informationseinheit 16, wobei das Prozessleit-Kommunikationselement 80 Daten bezüglich zumindest der Zubereitungskenngrösse an das Info-Kommunikationselement 84 übermittelt. Ferner steuert nach Berechnung der weiteren Zubereitungskenngrösse die Prozessleitvorrichtung 14 eine Übermittlung dieser Information an die Informationseinheit 16, wobei das Prozessleit-Kommunikationselement 80 Daten bezüglich zumindest der weiteren Zubereitungskenngrösse an das Info-Kommunikationselement 84 übermittelt. Eine Info-Steuereinheit 206 der Informationseinheit 16 ist dazu vorgesehen, die Anzeige der von der Prozessleitvorrichtung 14 empfangenen Daten über die Anzeigeeinheit 30 zu steuern und/oder zu regeln. Basierend auf den Informationen und Daten von der Prozessleitvorrichtung bezüglich der Zubereitungskenngrösse und zumindest der weiteren Zubereitungskenngrösse berechnet die Info-Steuereinheit 206 vorliegend stets den aktuellen Wert der Zubereitungskenngrösse und den aktuellen Wert der der weiteren Zubereitungskenngrösse sowie steuert eine Ausgabe dieser aktuellen Werte. In Figur 6 ist die Anzeige des aktuellen Werts der Zubereitungskenngrösse, vorliegend der Zubereitungsdauer und die Anzeige des aktuellen Werts der weiteren Zubereitungskenngrösse, und zwar des Härtegrads des Nahrungsmittels 12 auf der Anzeigeeinheit 30 der Informationseinheit 16 dargestellt. Die Informationseinheit 16 gibt den Ablauf einer Zubereitungszeit dem Benutzer aus, in diesem Beispiel in Minuten und Sekunden. Ferner gibt die Informationseinheit 16 den aktuellen Härtegrad des Nahrungsmittels 12 anhand von Bildern des Nahrungsmittels 12 dem Benutzer aus.

Die Informationseinheit 16 ist dazu vorgesehen, von dem Benutzer während des Zubereitungsprozesses des Nahrungsmittels 12 frei herumgetragen und positioniert zu werden. Die Informationseinheit 16 dient als eine Art tragbarer Timer bzw. Eieruhr zur Überwachung des Zubereitungsprozesses. Vorliegend weist die tragbare Informationseinheit 16 eine Signaleinheit 32 zur optischen und/oder akustischen und/oder haptischen Ausgabe bei Erreichen eines Ziel-Werts der Zubereitungskenngrösse auf. In diesem Beispiel ist der Ziel-Wert der Zubereitungskenngrösse ein Ablauf der Zubereitungszeit. Ist die Zubereitungsdauer bzw. die Zubereitungszeit gleich Null, so ist der Zubereitungsprozess zu Ende. Die Signaleinheit 32 ist dazu vorgesehen, den Benutzer auf den Ablauf der Zubereitungszeit, und damit auf das Ende des Zubereitungsprozesses hinzuweisen. Vorliegend informiert die Signaleinheit 32 den Benutzer darüber, dass sein Ei-Produkt auf seinen gewünschten Härtegrad fertig gegart ist. Die Signaleinheit 32 ist dazu vorgesehen, den Ablauf der Zubereitungszeit mit einem Leuchten und/oder Blinken dem Benutzer optisch sichtbar zu machen. Ferner ist die Signaleinheit 32 dazu vorgesehen, ein akustisches Signal auszugeben, beispielsweise zu piepsen. Zusätzlich ist die Signaleinheit 32 dazu vorgesehen, ein haptisches Signal auszugeben, beispielsweise zu vibrieren.

Zur Energieversorgung der tragbaren Informationseinheit 16 weist das Nahrungsmittelzubereitungssystem 50 eine Energieversorgungseinheit 28 auf. Die Energieversorgungseinheit 28 umfasst in diesem Fall eine als Ladestation ausgebildete Ladeeinheit 210 zur drahtlosen Energieübertragung an die Informationseinheit 16. Die Ladeeinheit 210 ist vorliegend mit dem Zubereitungsgerät 10 kabelverbunden und bezieht Strom zum Betrieb von dem Zubereitungsgerät 10 (vgl. Figuren 1, 2 und 7). Alternativ kann die Ladeeinheit 210 auch individuell ans Stromnetz anschliessbar sein oder einen Akku, eine Batterie oder dergleichen aufweisen. Die Ladeeinheit 210 weist eine Energiesendeeinheit 66 zur drahtlosen Energieübertragung auf. Ferner weist die Informationseinheit 16 eine Energieempfangseinheit 64 der Energieversorgungseinheit 28 auf. Die Energiesendeeinheit 66 ist dazu vorgesehen, induktiv Energie an die Energieempfangseinheit 64 zu übertragen. Vorliegend ist die Energieempfangseinheit 64 dazu vorgesehen, Energie zu speichern. Für einen Ladevorgang ist die Informationseinheit 16 auf der Ladestation 210 bezüglich, und zwar oberhalb zu der Energiesendeeinheit 66 (in Höhenrichtung betrachtet) platzierbar. Zur Steuerung einer Energieübertragung weist die Ladeeinheit 210 eine Lade-Steuereinheit 204 auf. Die Lade-Steuereinheit 210 ist dazu vorgesehen, die Energiesendeeinheit 66 anzusteuern und damit die Energieübertragung/Energieversorgung zu regeln. Alternativ kann die Ladestation 210 zumindest einen Permanentmagneten aufweisen, wodurch auf eine Anbindung an das Stromnetz oder zusätzliche Energieträger, wie einen Akku oder eine Batterie in der Ladestation 210 und/oder auf die Energiesendeeinheit 66 verzichtet werden kann.

Vorliegend detektiert die Informationseinheit 16 eine Positionierung auf der Ladestation 210. Die Informationseinheit 16 sendet diese Information an die Prozessleitvorrichtung 14, welche der Ladestation 210 eine Information zur Inbetriebnahme des Ladevorgangs, und zwar zum Start der Energieübertragung mittels der Energiesendeeinheit 66 übermittelt. Alternativ kann auch eine Energieversorgung automatisch starten, sobald die Informationseinheit 16 auf der Ladeeinheit 210 angeordnet ist. Wird die Informationseinheit 16 von der Ladeeinheit 210 entfernt, wird eine Energieversorgung beendet. Die Informationseinheit 16 übermittelt der Prozessleitvorrichtung 14 ein Entfernen von der Ladestation 210. Daraufhin stoppt die Prozessleitvorrichtung 14 den Ladevorgang und übermittelt der Ladestation 210 entsprechend zumindest eine Information zum Beenden der Energieübertragung. Vorliegend weist die Ladestation 210 mehrere Energiesendeeinheiten 66 auf, und zwar genau so viele wie es Informationseinheiten 16, 60, 62, gibt, demnach in diesem Beispiel acht Stück. Die Lade-Steuereinheit 204 betreibt die Energiesendeeinheiten 66 jeweils gepulst. Die Informationseinheit 16 empfängt mittels der Energieempfangseinheit 64 die von der Energiesendeeinheit ausgesendeten Pulse. Eine Dauer einer Pause zwischen den Pulsen für jede Energiesendeeinheit 66 ist einmalig, sodass die Informationseinheit 16 aufgrund der gepulten Betreibung der Energiesendeeinheiten 66 die Energiesendeeinheiten 66 jeweils einzeln und unabhängig voneinander erkennt und damit ermittelt, auf welcher Position auf der Ladestation 210, und zwar bezüglich welcher Energiesendeeinheit 66 der Ladestation 210 die Informationseinheit 16 angeordnet ist. Dadurch wird eine Positionserkennung bereitgestellt, sodass die Informationseinheit 16 bei Anordnung auf der Ladestation 210 der Prozessleitvorrichtung 14 mitteilt, bezüglich welcher der Energiesendeeinheiten 66 die Informationseinheit 16 angeordnet ist. Ferner umfasst die Ladeeinheit 210 ein Lade-Kommunikationselement 86 zur Kommunikation mit zumindest der Prozessleitvorrichtung 14, und zwar dem Prozessleit-Kommunikationselement 80 aufweisen. Mittels dem Prozessleit-Kommunikationselement 80 empfängt die Prozessleit-Steuereinheit 70 zumindest eine Information von der Lade-Steuereinheit 204 und/oder sendet zumindest einen Steuerbefehl an die Lade-Steuereinheit 204. Vorliegend übermittelt die Prozessleit-Steuereinheit 70 der Lade-Steuereinheit 204, ob die Informationseinheit 16 auf bzw. bezüglich zu welcher Energiesendeeinheit 66 angeordnet und/oder positioniert ist und ob die Informationseinheit 16 zur Energieversorgung betriebsbereit ist.

Im Gastrobereich oder in der Hotellerie kann es vorkommen, dass mehrere Benutzer gleichzeitig das Zubereitungsgerät 10 zur Zubereitung eines Nahrungsmittels 12 nutzen. Für diesen Fall, umfasst das Zubereitungsgerät 10, wie bereits erläutert, eine Vielzahl von Halteeinheiten 52, welche jeweils in einem Zubereitungsbereich 34, 36, 38, 40 der Zubereitungsbereiche 34, 36, 38, 40 des Zubereitungsgeräts 10 positionierbar sind. Ferner umfasst das Nahrungsmittelzubereitungssystem 50 eine Vielzahl von Informationseinheiten 16, 60, 62, wobei die Prozessleitvorrichtung 14 dazu vorgesehen ist, jeweils einer der tragbaren Informationseinheiten 16, 60, 62 einen Zubereitungsbereich 34, 36, 38 der Zubereitungsbereiche 34, 36, 38 des Zubereitungsgeräts 10 zuzuordnen. Vorliegend ordnet die Prozessleitvorrichtung 14 jeweils einer der tragbaren Informationseinheiten 16, 60, 62 einer Halteeinheit 52 zu. Dadurch können die Benutzer unterschiedliche Zubereitungsprozesse, in diesem Beispiel unterschiedliche Härtegrade ihres Ei-Produkts wählen, und individuell mit der Informationseinheit 16, 60, 62 Informationen über ihren speziellen Zubereitungsprozess erhalten. Vorliegend ist die Informationseinheit 16 dazu vorgesehen, zusätzlich zu dem aktuellen Wert der Zubereitungsdauer auch eine Information über die Position und/oder den Ort des garenden Nahrungsmittels 12 auszugeben, und zwar in welchem Zubereitungsbereich 34, 36, 38, 40 und/oder in welchem Halteeinheit 52 das entsprechende Ei-Produkt in dem Zubereitungsprozess positioniert ist. Damit kann eine Verwechslungsgefahr bei gleichzeitig stattfinden Zubereitungsprozessen verringert bzw. ausgeschlossen werden.

Nachfolgend soll ein Verfahren zur Benutzung des Nahrungsmittelzubereitungssystems 50 und zur Zubereitung des Nahrungsmittels 12 anhand des schematischen Verfahrensdiagramms in Figur 8 erläutert werden. In einem Vorbereitungsschritt 100 des genannten Verfahrens werden Vorbereitungen zum Start der Zubereitung des Nahrungsmittels 12 getroffen. Hierbei wird die Prozessleiteinheit 14 mit der Zubereitungseinheit 10 gekoppelt und das Zubereitungsgerät 10 an eine Stromversorgung angeschlossen. Ferner werden alle notwenigen Komponenten des Nahrungsmittelzubereitungssystems 50 wie die Prozessleiteinheit 14, das Zubereitungsgerät 10, die Informationseinheit 16 und Energieversorgungseinheit 28 aktiviert und/oder eingeschaltet. Ferner sind in dem Vorbereitungsschritt 100 Testdurchläufe, Kalibrierungsprozesse und/oder eine Initialisierung der Hardware durchführbar. In einem ersten Verfahrensschritt 102 des Verfahrens, welcher hinsichtlich einer zeitlichen Betrachtung nach dem Vorbereitungsschritt erfolgt, wird das Garmedium in dem Zubereitungsgerät 10 auf eine vorbestimmte und/oder vordefinierte Temperatur erhitzt. Vorliegend wird das Wasser in dem Aufnahmebehältnis 68 auf zumindest 90° Celsius erhitzt. Der Aufheizvorgang ist mittels des weiteren Temperaturelements 76 überwachbar. In einem zweiten Verfahrensschritt 104 des Verfahrens, welcher hinsichtlich des zeitlichen Verlaufs nach dem ersten Verfahrensschritt erfolgt, wird der Benutzer aufgefordert, das Nahrungsmittel 12, und zwar vorliegend das Ei-Produkt auf/in der Aufnahmeeinheit 208 zu positionieren. Anschliessend wird das Nahrungsmittel 12 in einem dritten Verfahrensschritt 106 des Verfahrens hinsichtlich zumindest einer physikalischen Grösse von der Sensoreinheit 18 sensiert und/oder erfasst. In dieser beispielhaften Ausgestaltung wird mittels des Gewichtsensorelements 72 das Gewicht des Nahrungsmittels 12 sensiert. Ferner wird in dem dritten Verfahrensschritt 106 die Temperatur der Umgebung mittels des Temperatursensorelements 74 sensiert. Zusätzlich wird vorliegend in dem dritten Verfahrensschritt 106 mittels des optischen Sensorelements 78 die Position und/oder Lage und/oder Ausgestaltung und/oder Grösse und/oder Form des Nahrungsmittels 12 erfasst. In einem vierten Verfahrensschritt 108 des Verfahrens werden zumindest der Parameter des Nahrungsmittels 12 und zumindest der Parameter des Zubereitungsgeräts 10 des Parametersatzes ermittelt. Ferner wird in dem vierten Verfahrensschritt 108 die Zubereitungskenngrösse, und zwar die Zubereitungsdauer mittels der Prozessleitvorrichtung 14, und zwar vorliegend mittels der Prozessleit-Steuereinheit 70 berechnet. In einem auf den vierten Verfahrensschritt 108 folgenden fünften Verfahrensschritt 110 des Verfahrens werden dem Benutzer mittels der Benutzerschnittstelle 20 der Prozessleitvorrichtung 14 mögliche Zubereitungsprozesse zur Auswahl vorgeschlagen. Vorliegend werden dem Benutzer verschiedene Härtegrade des Ei-Produkts vorgeschlagen. Der Benutzer wird in dem fünften Verfahrensschritt 110 dazu aufgefordert über die Benutzerschnittstelle 20 ein Härtegrad des Ei-Produkts auszuwählen. Nachdem der Benutzer seinen gewünschten Härtegrad des Ei-Produkts ausgewählt hat, wird in einem sechsten Verfahrensschritt 112 des Verfahrens eine endgültige von der Prozessleitvorrichtung 14 berechnete Zubereitungskenngrösse, vorliegend die Zubereitungsdauer ausgegeben. Ferner wird der Benutzer in dem sechsten Verfahrensschritt 112 dazu aufgefordert das Nahrungsmittel 12 in die Halteeinheit 52 einzusetzen. Die Prozessleitvorrichtung 14 weist den Benutzer darauf hin, in welchen der Mehrzahl von Halteeinheiten 52, das Nahrungsmittel 12 eingesetzt werden soll. Alternativ wird der Benutzer dazu aufgefordert den Prozess abzubrechen. Bricht der Benutzer den Prozess ab, so kehrt die Prozessleitvorrichtung 14 zum ersten Verfahrensschritt 102 zurück und das Verfahren beginnt wieder bei dem ersten Verfahrensschritt 102.

Wenn der Benutzer das Nahrungsmittel 12 in der Halteeinheit 52 positioniert hat, dann fordert ihn die Prozessleitvorrichtung 14 in einem nachfolgenden siebten Verfahrensschritt 114 des Verfahrens auf, die tragbare Informationseinheit 16 von der Ladestation zu nehmen 210. In dem siebten Verfahrensschritt 114 wird zumindest die Zubereitungskenngrösse auf die Informationseinheit 16 übertragen. In einem achten Verfahrensschritt 116 des Verfahrens läuft der Zubereitungsprozess des Nahrungsmittels 12 ab und der aktuelle Wert der Zubereitungskenngrösse, und zwar vorliegend er Zubereitungsdauer wird von der Informationseinheit 16 an den Benutzer ausgegeben. Ist der Ziel-Wert der Zubereitungskenngrösse erreicht und damit der Zubereitungsprozess beendet, so wird dies dem Benutzer in einem neunten Verfahrensschritt 118 des Verfahrens akustisch, optisch und/oder haptisch signalisiert. Ferner wird der Benutzer aufgefordert, sein Nahrungsmittel 12 aus dem Zubereitungsgerät 10 zu nehmen/zu entfernen, da dies nun fertig gegart ist. Der Benutzer wird zudem aufgefordert, die Informationseinheit 16 wieder auf der Ladestation 210 zu positionieren. Anschliessend kann das Verfahren zur Zubereitung eines Nahrungsmittels 12 wieder von neuem gestartet werden.

### Bezugszeichen

- 10: Zubereitungsgerät
- 12: Nahrungsmittel
- 14: Prozessleitvorrichtung
- 16: Informationseinheit
- 18: Sensoreinheit
- 20: Benutzerschnittstelle
- 26: Kommunikationseinheit
- 28: Energieversorgungseinheit
- 30: Anzeigeeinheit
- 32: Signaleinheit
- 34: Zubereitungsbereich
- 36: Zubereitungsbereich
- 38: Zubereitungsbereich
- 40: Zubereitungsbereich
- 50: Nahrungsmittelzubereitungssystem
- 52: Halteeinheit
- 54: Haltebereich
- 56: Kopplungseinheit
- 60: Informationseinheit
- 62: Informationseinheit
- 64: Energieempfangseinheit
- 66: Energiesendeeinheit
- 68: Aufnahmebehältnis
- 70: Prozessleit-Steuereinheit
- 72: Gewichtssensorelement
- 74: Temperatursensorelement
- 76: Temperatursensorelement
- 78: Optisches Sensorelement
- 80: Prozessleit-Kommunikationselement
- 82: Geräte-Kommunikationselement
- 84: Info-Kommunikationselement
- 86: Lade-Kommunikationselement
- 88: Sendeeinheit
- 90: Geräte-Steuereinheit
- 92: Griffelement
- 96: Kennzeichnungselement
- 98: Positionserkennungseinheit
- 100: Vorbereitungsschritt
- 102: Verfahrensschritt
- 104: Verfahrensschritt
- 106: Verfahrensschritt
- 108: Verfahrensschritt
- 110: Verfahrensschritt
- 112: Verfahrensschritt
- 114: Verfahrensschritt
- 116: Verfahrensschritt
- 118: Verfahrensschritt
- 200: Detektionseinheit
- 202: Heizeinheit
- 204: Lade-Steuereinheit
- 206: Info-Steuereinheit
- 208: Aufnahmeeinheit
- 210: Ladeeinheit

## Patentansprüche

1. Nahrungsmittelzubereitungssystem (50), insbesondere Nahrungsmittelgarsystem, mit zumindest einem Zubereitungsgerät (10), insbesondere Gargerät, zur Zubereitung zumindest eines Nahrungsmittels (12) und mit einer Prozessleitvorrichtung (14), welche dazu vorgesehen ist, einen Parametersatz, welcher zumindest einen Parameter des Nahrungsmittels (12) und zumindest einen Parameter des Zubereitungsgeräts (10) umfasst, zu erfassen und diesen zur Berechnung zumindest einer Zubereitungskenngrösse heranzuziehen, **gekennzeichnet durch** zumindest eine tragbare Informationseinheit (16), welche dazu vorgesehen ist, die Zubereitungskenngrösse von der Prozessleitvorrichtung (14) zu empfangen und während eines Zubereitungsprozesses des Nahrungsmittels (12) durch das Zubereitungsgerät (10) einen aktuellen Wert der Zubereitungskenngrösse auszugeben.

2. Nahrungsmittelzubereitungssystem (50) nach Anspruch 1, **gekennzeichnet durch** zumindest eine Sensoreinheit (18), welche dazu vorgesehen ist, zumindest eine physikalische Grösse und/oder eine physikalische Eigenschaft zur Ermittlung zumindest eines Parameters des Parametersatzes zu messen.

3. Nahrungsmittelzubereitungssystem (50) nach Anspruch 1 oder 2, **dadurch gekennzeichnet, dass** die Prozessleitvorrichtung (14) dazu vorgesehen ist, das Zubereitungsgerät (10) basierend auf zumindest einem Parameter des Parametersatzes anzusteuern.

4. Nahrungsmittelzubereitungssystem (50) nach einem der vorgehenden Ansprüche, **dadurch gekennzeichnet, dass** die Prozessleitvorrichtung (14) zumindest eine Benutzerschnittstelle (20) aufweist.

5. Nahrungsmittelzubereitungssystem (50) nach einem der vorgehenden Ansprüche, **dadurch gekennzeichnet, dass** der Parametersatz zumindest einen benutzerdefinierbaren Parameter umfasst.

6. Nahrungsmittelzubereitungssystem (50) nach den Ansprüchen 4 und 5, **dadurch gekennzeichnet, dass** die Benutzerschnittstelle (20) zur Eingabe des benutzerdefinierbaren Parameters vorgesehen ist.

7. Nahrungsmittelzubereitungssystem (50) nach einem der vorgehenden Ansprüche, **dadurch gekennzeichnet, dass** die Zubereitungskenngrösse ein Zubereitungsdauer ist.

8. Nahrungsmittelzubereitungssystem (50) nach einem der vorhergehenden Ansprüche, **gekennzeichnet durch** eine Kommunikationseinheit (26) zur drahtlosen Kommunikation zwischen zumindest zwei Komponenten (10, 14, 16, 210) des Nahrungsmittelzubereitungssystems (50).

9. Nahrungsmittelzubereitungssystem (50) nach einem der vorhergehenden Ansprüche, **gekennzeichnet durch** eine Energieversorgungseinheit (28) zur Energieversorgung der tragbaren Informationseinheit (16).

10. Nahrungsmittelzubereitungssystem (50) nach einem der vorhergehenden Ansprüche, **dadurch gekennzeichnet, dass** die tragbare Informationseinheit (16) zumindest eine Anzeigeeinheit (30) zur Anzeige des aktuellen Werts der Zubereitungskenngrösse aufweist.

11. Nahrungsmittelzubereitungssystem (50) nach einem der vorhergehenden Ansprüche, **dadurch gekennzeichnet, dass** die tragbare Informationseinheit (16) eine Signaleinheit (32) zur optischen und/oder akustischen und/oder haptischen Ausgabe bei Erreichen eines Ziel-Werts der Zubereitungskenngrösse aufweist.

12. Nahrungsmittelzubereitungssystem (50) nach einem der vorhergehenden Ansprüche, **gekennzeichnet durch** eine Mehrzahl von tragbaren Informationseinheiten (16, 60, 62), wobei die Prozessleitvorrichtung (14) dazu vorgesehen ist, jeweils einer der tragbaren Informationseinheiten (16, 60, 62) einen Zubereitungsbereich (34, 36, 38) des Zubereitungsgeräts (10) zuzuordnen.

13. Prozessleitvorrichtung (14) eines Nahrungsmittelzubereitungssystems (50) nach einem der vorhergehenden Ansprüche.

14. Tragbare Informationseinheit (16) eines Nahrungsmittelzubereitungssystems (50) nach einem der Ansprüche 1 bis 12.

15. Verwendung eines Nahrungsmittelzubereitungssystems (50) nach einem der Ansprüche 1 bis 12 zur Zubereitung von Ei-Produkten in der Gastronomie.
